# EUROPEAN PATENT APPLICATION

(11) **EP 4 303 243 A1**
(43) Date of publication of application: **10.01.2024**
(21) Application number: 22762989.6
(22) Date of filing: 17.02.2022
(51) Int. Cl.: C08F 299/00, C08K 5/098, C08K 5/34, C08F 2/44

(54) **CURABLE RESIN COMPOSITION, ACTIVE ENERGY RAY CURABLE RESIN COMPOSITION, CURED PRODUCT, AND ARTICLE**

(30) Priority: 02.03.2021 JP 2021032416
(71) Applicant: DIC CORPORATION, Itabashi-ku Tokyo 174-8520 (JP)
(72) Inventor: YAMADA Shunsuke, Ichihara-shi, Chiba 290-8585 (JP); NAKANO Hiroaki, Ichihara-shi, Chiba 290-8585 (JP); UJIGAWA Mari, Ichihara-shi, Chiba 290-8585 (JP)
(74) Representative: TBK
(86) International application number: PCT/JP2022/006296
(87) International publication number: WO 2022/185933

(57) **Abstract**

The present invention provides a curable resin composition containing a resin (A) having an acid group and a polymerizable unsaturated group and a compound (B) containing a compound (b1) having a heteroatom having an unshared electron pair in the molecule and a metal salt (b2) as essential raw materials, the heteroatom being one or more selected from the group consisting of nitrogen, oxygen, sulfur, and phosphorus, and also provides an active energy ray curable resin composition containing the same, a cured product of the active energy ray curable resin composition, and an article. This curable resin composition has excellent work stability and latency and can form a cured product having excellent heat resistance and substrate adhesion.

## Description

### Technical Field

The present invention relates to a curable resin composition, an active energy ray curable resin composition, a cured product, and an article.

### Background Art

In recent years, curable compositions such as active energy ray curable compositions that can be cured by active energy rays such as ultraviolet rays and thermosetting compositions that can be cured by heat are widely used in the fields of inks, paints, coating agents, adhesives, optical components, and the like. In particular, for the coating agent applications, it is generally required to be able to impart design to the surface of various types of substrates, have excellent curability, and form a coating film that can prevent degradation of the surface of the substrates. Furthermore, in recent years, industry demands materials having not only heat resistance and substrate adhesion of cured products obtained therefrom but also excellent work stability and latency.

As conventional active energy ray curable compositions, photosensitive resin compositions containing an epoxy acrylate resin obtained by further reacting tetrahydrophthalic anhydride with an intermediate obtained by reacting together a cresol novolac type epoxy resin, acrylic acid, and phthalic anhydride are known (refer to PTL 1, for example). However, they do not meet ever-increasing requirements in the future in heat resistance and substrate adhesion and are insufficient for recent market requirements in work stability and latency.

Given these circumstances, materials having excellent work stability and latency in addition to heat resistance and substrate adhesion have been demanded.

### Citation List

### Patent Literature

PTL 1: Japanese Unexamined Patent Application Publication No. H08-259663

### Summary of Invention

### Technical Problem

An object of the present invention is to provide a curable resin composition having excellent work stability and latency and being capable of forming a cured product having excellent heat resistance and substrate adhesion, an active energy ray curable resin composition containing the same, a cured product of the active energy ray curable resin composition, and an article.

### Solution to Problem

To achieve the above object, the inventors of the present invention have conducted earnest study to find that the above object can be achieved by using a curable resin composition containing a resin having an acid group and a polymerizable unsaturated group and a compound containing a compound having a specific heteroatom having an unshared electron pair in the molecule and a metal salt as essential raw materials, thus completing the present invention.

That is, the present invention relates to a curable resin composition containing a resin (A) having an acid group and a polymerizable unsaturated group and a compound (B) containing a compound (b1) having a heteroatom having an unshared electron pair in the molecule and a metal salt (b2) as essential raw materials, the heteroatom being one or more selected from the group consisting of nitrogen, oxygen, sulfur, and phosphorus, an active energy ray curable resin composition, a cured product, and an article.

### Advantageous Effects of Invention

The curable resin composition of the present invention has excellent work stability and latency and can form a cured product having excellent heat resistance and substrate adhesion and can be thus used as a coating agent and an adhesive and can be suitably used as a coating agent in particular.
"Excellent work stability" referred to in the present invention refers to ease of handling of the curable resin composition, that is, the property that curing reactivity before irradiation with active energy rays can be suppressed significantly low. "Excellent latency" refers to the property that a curing reaction is inhibited in a low temperature range (about 0 to 100°C) and the curing reaction is promoted in a high temperature range (100°C or higher). Description of Embodiments

The curable resin composition of the present invention contains a resin (A) having an acid group and a polymerizable unsaturated group and a compound (B) containing a compound (b1) having a heteroatom having an unshared electron pair in the molecule and a metal salt (b2) as essential raw materials.

The resin (A) having an acid group and a polymerizable unsaturated group may be any one so long as it has an acid group and a polymerizable unsaturated group in the resin. Examples thereof include epoxy resins having an acid group and a polymerizable unsaturated group, urethane resins having an acid group and a polymerizable unsaturated group, acrylic resins having an acid group and a polymerizable unsaturated group, amideimide resins having an acid group and a polymerizable unsaturated group, acrylamide resins having an acid group and a polymerizable unsaturated group, and ester resins having an acid group and a polymerizable unsaturated group.

Examples of the acid group include a carboxy group, a sulfonic acid group, and a phosphoric acid group.

Examples of the polymerizable unsaturated group include a (meth)acryloyl group, an allyl group, an isopropenyl group, a 1-propenyl group, a styryl group, a styrylmethyl group, a maleimide group, and a vinyl ether group. In the present invention, "(meth)acryloyl" means acryloyl and/or methacryloyl. "(Meth)acrylate" means acrylate and/or methacrylate. Furthermore, "(meth)acrylic" means acrylic and/or methacrylic.

Examples of the epoxy resins having an acid group and a polymerizable unsaturated group include epoxy (meth)acrylate resins having an acid group with an epoxy resin, an unsaturated monobasic acid, and a polybasic acid anhydride as essential reaction raw materials and epoxy (meth)acrylate resins having an acid group and a urethane bond with an epoxy resin, an unsaturated monobasic acid, a polybasic acid anhydride, a polyisocyanate compound, and a (meth)acrylate compound having a hydroxy group as reaction raw materials.

Examples of the epoxy resin include bisphenol type epoxy resins, phenylene ether type epoxy resins, naphthylene ether type epoxy resins, biphenyl type epoxy resins, triphenylmethane type epoxy resins, phenol novolac type epoxy resins, cresol novolac type epoxy resins, bisphenol novolac type epoxy resins, naphthol novolac type epoxy resins, naphthol-phenol co-condensed novolac type epoxy resins, naphthol-cresol co-condensed novolac type epoxy resins, phenol aralkyl type epoxy resins, naphthol aralkyl type epoxy resins, dicyclopentadiene-phenol addition reaction type epoxy resins, biphenyl aralkyl type epoxy resins, fluorene type epoxy resins, xanthene type epoxy resins, dihydroxybenzene type epoxy resins, trihydroxybenzene type epoxy resins, and oxazolidone type epoxy resins. These epoxy resins can be used alone, or two or more can be used in combination.

Examples of the bisphenol type epoxy resins include bisphenol A type epoxy resins, bisphenol AP type epoxy resins, bisphenol B type epoxy resins, bisphenol BP type epoxy resins, bisphenol E type epoxy resins, bisphenol F type epoxy resins, and bisphenol S type epoxy resins.

Examples of the hydrogenated bisphenol type epoxy resins include hydrogenated bisphenol A type epoxy resins, hydrogenated bisphenol B type epoxy resins, hydrogenated bisphenol E type epoxy resins, hydrogenated bisphenol F type epoxy resins, and hydrogenated bisphenol S type epoxy resins.

Examples of the biphenol type epoxy resins include 4,4'-biphenol type epoxy resins, 2,2'-biphenol type epoxy resins, tetramethyl-4,4'-biphenol type epoxy resins, and tetramethyl-2,2'-biphenol type epoxy resins.

Examples of the hydrogenated biphenol type epoxy resins include hydrogenated 4,4'-biphenol type epoxy resins, hydrogenated 2,2'-biphenol type epoxy resins, hydrogenated tetramethyl-4,4'-biphenol type epoxy resins, and hydrogenated tetramethyl-2,2'-biphenol type epoxy resins. These epoxy resins can be used alone, or two or more can be used in combination.

Examples of the unsaturated monobasic acid include acrylic acid, methacrylic acid, crotonic acid, cinnamic acid, α-cyanocinnamic acid, β-styrylacrylic acid, and β-furfurylacrylic acid. Acid halides and esters of the unsaturated monobasic acid can also be used. In addition, a compound represented by General Formula (1) below and the like can also be used.

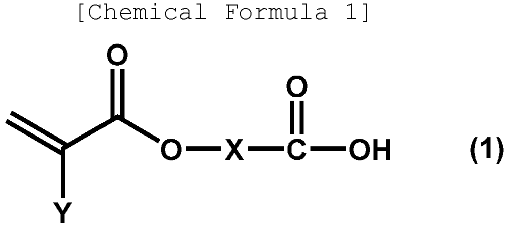

In Formula (1), X represents a C₁₋₁₀ alkylene chain, a polyoxyalkylene chain, a (poly)ester chain, an aromatic hydrocarbon chain, or a (poly)carbonate chain and may have halogen atoms, alkoxy groups, or the like in the structure. Y is a hydrogen atom or a methyl group.

Examples of the polyoxyalkylene chain include a polyoxyethylene chain and a polyoxypropylene chain.

Examples of the (poly)ester chain include a (poly)ester chain represented by General Formula (X-1) below.

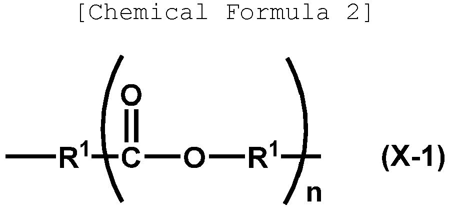

In Formula (X-1), R¹ is a C₁₋₁₀ alkylene group, and n is an integer of 1 to 5.

Examples of the aromatic hydrocarbon chain include a phenylene chain, a naphthylene chain, a biphenylene chain, a phenylnaphthylene chain, and a binaphthylene chain. In addition, hydrocarbon chains having aromatic rings such as a benzene ring, a naphthalene ring, an anthracene ring, and a phenanthrene ring as substructures can be used.

Examples of the (poly)carbonate chain include a (poly)carbonate chain represented by General Formula (X-2) below.

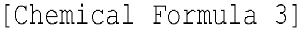

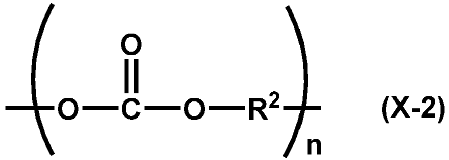

In Formula (X-2), R² is a C₁₋₁₀ alkylene group, and n is an integer of 1 to 5.

The molecular weight of the compound represented by General Formula (1) above is preferably in a range of 100 to 500 and more preferably in a range of 150 to 400.

These unsaturated monobasic acids can be used alone, or two or more can be used in combination.

Examples of the polybasic acid anhydride include aliphatic polybasic acid anhydrides, alicyclic polybasic acid anhydrides, aromatic polybasic acid anhydrides, acid halides of aliphatic polybasic acid anhydrides, acid halides of alicyclic polybasic acid anhydrides, and acid halides of aromatic polybasic acid anhydrides.

Examples of the aliphatic polybasic acid anhydrides include acid anhydrides of oxalic acid, malonic acid, succinic acid, glutaric acid, adipic acid, pimelic acid, suberic acid, azelaic acid, sebacic acid, maleic acid, fumaric acid, citraconic acid, itaconic acid, glutaconic acid, and 1,2,3,4-butane tetracarboxylic acid. As the aliphatic polybasic acid anhydrides, the aliphatic hydrocarbon group may be either linear or branched and may have unsaturated bonds in the structure.

In the present invention, as the alicyclic polybasic acid anhydrides, those in which an acid anhydride group is bonded to the alicyclic structure are the alicyclic polybasic acid anhydrides, and the presence or absence of aromatic rings in other structural moieties doesn't matter. Examples of the alicyclic polybasic acid anhydrides include acid anhydrides of tetrahydrophthalic acid, hexahydrophthalic acid, methylhexahydrophthalic acid, cyclohexane tricarboxylic acid, cyclohexane tetracarboxylic acid, bicyclo[2.2.1]heptane-2,3-dicarboxylic acid, methyl bicyclo[2.2.1]heptane-2,3-dicarboxylic acid, and 4-(2,5-dioxotetrahydrofuran-3-yl)-1,2,3,4-tetrahydronaphthalene-1,2-dicarboxylic acid.

Examples of the aromatic polybasic acid anhydrides include acid anhydrides of phthalic acid, trimellitic acid, pyromellitic acid, naphthalene dicarboxylic acid, naphthalene tricarboxylic acid, naphthalene tetracarboxylic acid, biphenyldicarboxylic acid, biphenyltricarboxylic acid, biphenyltetracarboxylic acid, and benzophenone tetracarboxylic acid.

These polybasic acid anhydrides can be used alone, or two or more can be used in combination. Among these, preferred are tetrahydrophthalic anhydride, succinic anhydride, and cyclohexanedicarboxylic anhydride because they can produce a curable resin composition having excellent work stability and latency and being capable of forming a cured product having excellent heat resistance and substrate adhesion.

Examples of the polyisocyanate compound include aliphatic diisocyanate compounds such as butane diisocyanate, hexamethylene diisocyanate, 2,2,4-trimethylhexamethylene diisocyanate, and 2,4,4-trimethylhexamethylene diisocyanate; alicyclic diisocyanate compounds such as norbornane diisocyanate, isophorone diisocyanate, hydrogenated xylylene diisocyanate, and hydrogenated diphenylmethane diisocyanate; aromatic diisocyanate compounds such as tolylene diisocyanate, xylylene diisocyanate, tetramethylxylylene diisocyanate, diphenylmethane diisocyanate, 1,5-naphthalene diisocyanate, 4,4'-diisocyanato-3,3'-dimethylbiphenyl, and o-toluidine diisocyanate; polymethylene polyphenyl polyisocyanate having a repeating structure represented by General Formula (2) below; and isocyanurate-modified products, biuret-modified products, and allophanate-modified products thereof. These polyisocyanate compounds can be used alone, or two or more can be used in combination.

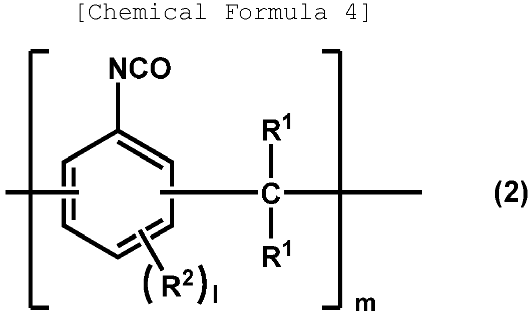

In Formula (2), R¹ are each independently any of a hydrogen atom and a C₁₋₆ hydrocarbon group, and R² are each independently a C₁₋₄ alkyl group. 1 is an integer of 0 or 1 to 3, and m is an integer of 1 to 15.

Examples of the (meth)acrylate compound having a hydroxy group include hydroxyethyl (meth)acrylate, hydroxypropyl (meth)acrylate, trimethylolpropane (meth)acrylate, trimethylolpropane di(meth)acrylate, pentaerythritol (meth)acrylate, pentaerythritol di(meth)acrylate, pentaerythritol tri(meth)acrylate, dipentaerythritol (meth)acrylate, dipentaerythritol di(meth)acrylate, dipentaerythritol tri(meth)acrylate, dipentaerythritol tetra(meth)acrylate, dipentaerythritol penta(meth)acrylate, ditrimethylolpropane(meth)acrylate, ditrimethylolpropane di(meth)acrylate, and ditrimethylolpropane tri(meth)acrylate. Examples also include (poly)oxyalkylene-modified products in which a (poly)oxyalkylene chain such as a (poly)oxyethylene chain, a (poly)oxypropylene chain, or a (poly)oxytetramethylene chain is introduced into the molecular structure of the various types of (meth)acrylate compounds having a hydroxy group and (meth)lactone-modified products in which a (poly)lactone structure is introduced into the molecular structure of the various types of (meth)acrylate compounds having a hydroxy group. These (meth)acrylate compounds having a hydroxy group can be used alone, or two or more can be used in combination.

The method for producing the epoxy resins having an acid group and a polymerizable unsaturated group is not limited to a particular method, and they may be produced by any method. The production of the epoxy resins having an acid group and a polymerizable unsaturated group may be performed in an organic solvent as needed, and a basic catalyst may be used as needed.

Examples of the organic solvent include hydrocarbon-based solvents such as toluene, xylene, heptane, hexane, and mineral spirits; ketone solvents such as methyl ethyl ketone, acetone, dimethyl formamide, methyl isobutyl ketone, cyclohexanone, and dimethylacetamide; cyclic ether solvents such as tetrahydrofuran and dioxolane; ester solvents such as methyl acetate, ethyl acetate, and butyl acetate; aromatic solvents such as toluene, xylene, and solvent naphtha; alicyclic solvents such as cyclohexane and methylcyclohexane; alcohol solvents such as carbitol, cellosolve, methanol, ethanol, propanol, isopropanol (2-propanol), butanol, cyclohexanol, and propylene glycol monomethyl ether; ether-based solvents such as propyl ether, methyl cellosolve, cellosolve, butyl cellosolve, and methyl carbitol; glycol ether solvents such as alkylene glycol monoalkyl ethers, dialkylene glycol monoalkyl ethers, and dialkylene glycol monoalkyl ether acetates; vegetable oils and fats such as soybean oil, linseed oil, rapeseed oil, and safflower oil; and methoxypropanol, cyclohexanone, methyl cellosolve, diethylene glycol monoethyl ether acetate, and propylene glycol monomethyl ether acetate. These organic solvents can be used alone, or two or more can be used in combination.

As the organic solvent, commercially available products can also be used. Examples of the commercially available products include "No. 1 Spindle Oil", "No. 3 Solvent", "No. 4 Solvent", "No. 5 Solvent", "No. 6 Solvent", "Naphthesol H", "Alkene 56NT", "AF Solvent No. 4", "AF Solvent No. 5", "AF Solvent No. 6", and "AF Solvent No. 7" manufactured by Eneos Corporation; "Diadol 13" and "Dialene 168" manufactured by Mitsubishi Chemical Corporation; "F Oxocol" and "F Oxocol 180" manufactured by Nissan Chemical Corporation; "Supasol LA35" and "Supasol LA38" manufactured by Idemitsu Kosan Co., Ltd.; and "Exxsol D80", "Exxsol D110", "Exxsol D120", "Exxsol D130", "Exxsol D160", "Exxsol D100K", "Exxsol D120K", "Exxsol D130K", "Exxsol D280", "Exxsol D300", and "Exxsol D320" manufactured by ExxonMobil Chemical Company.

Examples of the basic catalyst include amine compounds such as N-methylmorpholine, pyridine, 1,8-diazabicyclo[5.4.0]undecene-7 (DBU), 1,5-diazabicyclo[4.3.0]nonene-5 (DBN), 1,4-diazabicyclo[2.2.2]octane (DABCO), tri-n butylamine or dimethylbenzylamine, butylamine, octylamine, monoethanolamine, diethanolamine, triethanolamine, imidazole, 1-methylimidazole, 2,4-dimethylimidazole, 1,4-diethylimidazole, 3-aminopropyltrimethoxysilane, 3-aminopropyltriethoxysilane, 3-(N-phenyl)aminopropyltrimethoxysilane, 3-(2-aminoethyl)aminopropyltrimethoxysilane, 3-(2-aminoethyl)aminopropyl methyl dimethoxysilane, and tetramethylammonium hydroxide; quaternary ammonium salts such as trioctylmethylammonium chloride and trioctylmethylammonium acetate; phosphines such as trimethylphosphine, tributylphosphine, and triphenylphosphine; phosphonium salts such as tetramethylphosphonium chloride, tetraethylphosphonium chloride, tetrapropylphosphonium chloride, tetrabutylphosphonium chloride, tetrabutylphosphonium bromide, trimethyl(2-hydroxypropyl)phosphonium chloride, triphenylphosphonium chloride, and benzylphosphonium chloride; organic tin compounds such as dibutyltin dilaurate, octyltin trilaurate, octyltin diacetate, dioctyltin diacetate, dioctyltin dineodecanoate, dibutyltin diacetate, tin octylate, and 1,1,3,3-tetrabutyl-1,3-dodecanoyl distannoxane; organometal compounds such as zinc octylate and bismuth octylate; inorganic tin compounds such as tin octanoate; and inorganic metal compounds. Alkaline earth metal hydroxides, alkali metal carbonates, alkali metal hydroxides, and the like can also be used. These basic catalysts can be used alone, or two or more can be used in combination.

Examples of the urethane resins having an acid group and a polymerizable unsaturated group include those obtained by reacting together a polyisocyanate compound, a (meth)acrylate compound having a hydroxy group, a polyol compound having a carboxy group, and, as needed, a polybasic acid anhydride and a polyol compound other than the polyol compound having a carboxy group and those obtained by reacting together a polyisocyanate compound, a (meth)acrylate compound having a hydroxy group, a polybasic acid anhydride, and a polyol compound other than the polyol compound having a carboxy group.

As the polyisocyanate compound, the same ones as those exemplified as the polyisocyanate compound described above can be used, and the polyisocyanate compound can be used alone, or two or more can be used in combination.

As the (meth)acrylate compound having a hydroxy group, the same ones as those exemplified as the (meth)acrylate compound having a hydroxy group described above can be used, and the (meth)acrylate compound having a hydroxy group can be used alone, or two or more can be used in combination.

Examples of the polyol compound having a carboxy group include 2,2-dimethylolpropionic acid, 2,2-dimethylolbutanoic acid, and 2,2-dimethylolvaleric acid. The polyol compound having a carboxy group can be used alone, or two or more can be used in combination.

As the polybasic acid anhydride, the same ones as those exemplified as the polybasic acid anhydride described above can be used, and the polybasic acid anhydride can be used alone, or two or more can be used in combination.

Examples of the polyol compound other than the polyol compound having a carboxy group include aliphatic polyol compounds such as ethylene glycol, propylene glycol, butanediol, hexanediol, glycerin, trimethylolpropane, ditrimethylolpropane, pentaerythritol, and dipentaerythritol; aromatic polyol compounds such as biphenol and bisphenol; (poly)oxyalkylene-modified products in which a (poly)oxyalkylene chain such as a (poly)oxyethylene chain, a (poly)oxypropylene chain, or a (poly)oxytetramethylene chain is introduced into the molecular structure of the various types of polyol compounds; and lactone-modified products in which a (poly)lactone structure is introduced into the molecular structure of the various types of polyol compounds. The polyol compound other than the polyol compound having a carboxy group can be used alone, or two more can be used in combination.

The method for producing the urethane resins having an acid group and a polymerizable unsaturated group is not limited to a particular method, and they may be produced by any method. The production of the urethane resins having an acid group and a polymerizable unsaturated group may be performed in an organic solvent as needed, and a basic catalyst may be used as needed.

As the organic solvent, the same ones as those exemplified as the organic solvent described above can be used, and the organic solvent can be used alone, or two or more can be used in combination.

As the basic catalyst, the same ones as those exemplified as the basic catalyst described above can be used, and the basic catalyst can be used alone, or two or more can be used in combination.

Examples of the acrylic resins having an acid group and a polymerizable unsaturated group include reaction products obtained by introducing a (meth)acryloyl group by further reacting, with an acrylic resin intermediate obtained by polymerizing a (meth)acrylate compound (α) having a reactive functional group such as a hydroxy group, a carboxy group, an isocyanate group, or a glycidyl group as an essential component, a (meth)acrylate compound (β) having a reactive functional group capable of reacting with these functional groups and those obtained by reacting a polybasic acid anhydride with the hydroxy group of the reaction products.

The acrylic resin intermediate may be copolymerized with other compounds having a polymerizable unsaturated group as needed, in addition to the (meth)acrylate compound (α). Examples of the other compounds having a polymerizable unsaturated group include alkyl (meth)acrylates such as methyl (meth)acrylate, ethyl (meth)acrylate, propyl (meth)acrylate, butyl (meth)acrylate, and 2-ethylhexyl (meth)acrylate; (meth)acrylates having an alicyclic structure such as cyclohexyl (meth)acrylate, isobornyl (meth)acrylate, and dicyclopentanyl (meth)acrylate; (meth)acrylates having an aromatic ring such as phenyl (meth)acrylate, benzyl (meth)acrylate, and phenoxyethyl acrylate; (meth)acrylates having a silyl group such as 3-methacryloxypropyltrimethoxysilane; and styrene derivatives such as styrene, α-methylstyrene, and chlorostyrene. These compounds can be used alone, or two or more can be used in combination.

The (meth)acrylate compound (β) is not limited to a particular compound so long as it can react with the reactive functional group of the (meth)acrylate compound (α), but the following combinations are preferred from the viewpoint of reactivity. That is, when a (meth)acrylate having a hydroxy group is used as the (meth)acrylate compound (α), it is preferable to use a (meth)acrylate having an isocyanate group as the (meth)acrylate compound (β). When a (meth)acrylate having a carboxy group is used as the (meth)acrylate compound (α), it is preferable to use a (meth)acrylate having a glycidyl group as the (meth)acrylate compound (β). When a (meth)acrylate having an isocyanate group is used as the (meth)acrylate compound (α), it is preferable to use a (meth)acrylate having a hydroxy group as the (meth)acrylate compound (β). When a (meth)acrylate having a glycidyl group is used as the (meth)acrylate compound (α), it is preferable to use a (meth)acrylate having a carboxy group as the (meth)acrylate compound (β). The (meth)acrylate compound (β) can be used alone, or two or more can be used in combination.

As the polybasic acid anhydride, the same ones as those exemplified as the polybasic acid anhydride described above can be used, and the polybasic acid anhydride can be used alone, or two or more can be used in combination.

The method for producing the acrylic resins having an acid group and a polymerizable unsaturated group is not limited to a particular method, and they may be produced by any method. The production of the acrylic resins having an acid group and a polymerizable unsaturated group may be performed in an organic solvent as needed, and a basic catalyst may be used as needed.

As the organic solvent, the same ones as those exemplified as the organic solvent described above can be used, and the organic solvent can be used alone, or two or more can be used in combination.

As the basic catalyst, the same ones as those exemplified as the basic catalyst described above can be used, and the basic catalyst can be used alone, or two or more can be used in combination.

Examples of the amideimide resins having an acid group and a polymerizable unsaturated group include those obtained by reacting together an amideimide resin having an acid group and/or an acid anhydride group, a (meth)acrylate compound having a hydroxy group and/or a (meth)acrylate compound having an epoxy group, and, as needed, a compound having one or more reactive functional groups selected from the group consisting of a hydroxy group, a carboxy group, an isocyanate group, a glycidyl group, and an acid anhydride group. The compound having reactive functional groups may have a (meth)acryloyl group or does not necessarily have it.

The amideimide resins may have only either an acid group or an acid anhydride group or both. From the viewpoint of reactivity with the (meth)acrylate compound having a hydroxy group and the epoxy compound having a (meth)acryloyl group and reaction control, the amideimide resins preferably have an acid anhydride group and more preferably have both an acid group and an acid anhydride group. The solid acid value of the amideimide resins is preferably in a range of 60 to 350 mg KOH/g in terms of a measured value under a neutral condition, that is, a condition not involving ring-opening of the acid anhydride group. On the other hand, the measured value under a condition involving ring-opening of the acid anhydride group, such as in the presence of water, is preferably in a range of 61 to 360 mg KOH/g.

Examples of the amideimide resins include those obtained by using a polyisocyanate compound and a polybasic acid anhydride as reaction raw materials.

As the polyisocyanate compound, the same ones as those exemplified as the polyisocyanate compound described above can be used, and the polyisocyanate compound can be used alone, or two or more can be used in combination.

As the polybasic acid anhydride, the same ones as those exemplified as the polybasic acid anhydride described above can be used, and the polybasic acid anhydride can be used alone, or two or more can be used in combination.

For the amideimide resins, apart from the polyisocyanate compound and the polybasic acid anhydride, a polybasic acid can also be used in combination as a reaction raw material as needed.

As the polybasic acid, any compound having two or more carboxy groups in one molecule can be used. Examples thereof include oxalic acid, malonic acid, succinic acid, glutaric acid, adipic acid, pimelic acid, suberic acid, azelaic acid, sebacic acid, maleic acid, fumaric acid, phthalic acid, isophthalic acid, terephthalic acid, tetrahydrophthalic acid, hexahydrophthalic acid, methyl hexahydrophthalic acid, citraconic acid, itaconic acid, glutaconic acid, 1,2,3,4-butane tetracarboxylic acid, cyclohexane tricarboxylic acid, cyclohexane tetracarboxylic acid, bicyclo[2.2.1]heptane-2,3-dicarboxylic acid, methyl bicyclo[2.2.1]heptane-2,3-dicarboxylic acid, 4-(2,5-dioxotetrahydrofuran-3-yl)-1,2,3,4-tetrahydronaphthalene-1,2-dicarboxylic acid, trimellitic acid, pyromellitic acid, naphthalene dicarboxylic acid, naphthalene tricarboxylic acid, naphthalene tetracarboxylic acid, biphenyldicarboxylic acid, biphenyltricarboxylic acid, biphenyltetracarboxylic acid, and benzophenone tetracarboxylic acid. As the polybasic acid, for example, copolymers of a conjugated diene-based vinyl monomer and acrylonitrile, the copolymers having a carboxy group in the molecule, can also be used. These polybasic acids can be used alone, or two or more can be used in combination.

As the (meth)acrylate compound having a hydroxy group, the same ones as those exemplified as the (meth)acrylate compound having a hydroxy group described above can be used, and the (meth)acrylate compound having a hydroxy group can be used alone, or two or more can be used in combination.

Examples of the (meth)acrylate compound having an epoxy group include glycidyl group-containing (meth)acrylate monomers such as glycidyl (meth)acrylate, 4-hydroxybutyl (meth)acrylate glycidyl ether, and epoxy cyclohexylmethyl (meth)acrylate and mono(meth)acrylates of diglycidyl ether compounds such as hydroxybenzene diglycidyl ether, dihydroxynaphthalene diglycidyl ether, biphenol diglycidyl ether, and bisphenol diglycidyl ether. These (meth)acrylate compounds having an epoxy group can be used alone, or two or more can be used in combination.

The method for producing the amideimide resins having an acid group and a polymerizable unsaturated group is not limited to a particular method, and they may be produced by any method. The production of the amideimide resins having an acid group and a polymerizable unsaturated group may be performed in an organic solvent as needed, and a basic catalyst may be used as needed.

As the organic solvent, the same ones as those exemplified as the organic solvent described above can be used, and the organic solvent can be used alone, or two or more can be used in combination.

As the basic catalyst, the same ones as those exemplified as the basic catalyst described above can be used, and the basic catalyst can be used alone, or two or more can be used in combination.

Examples of the acrylamide resins having an acid group and a polymerizable unsaturated group include those obtained by reacting together a compound having a phenolic hydroxy group, an alkylene oxide or an alkylene carbonate, an N-alkoxyalkyl (meth)acrylamide compound, a polybasic acid anhydride, and, as needed, an unsaturated monobasic acid.

The compound having a phenolic hydroxy group refers to compounds having at least one phenolic hydroxy group in the molecule. Examples of the compounds having at least one phenolic hydroxy group in the molecule include compounds represented by General Formulae (3-1) to (3-5) below.

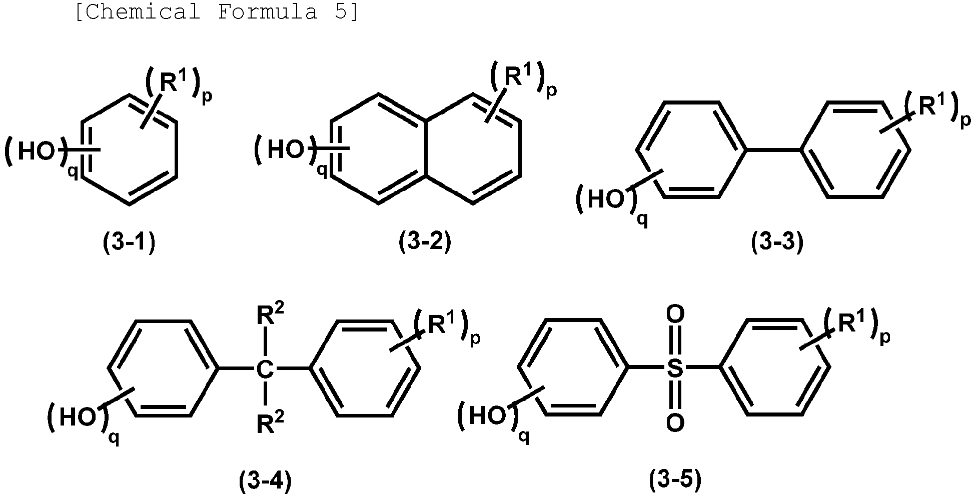

In General Formulae (3-1) to (3-5) above, R¹ is any of a C₁₋₂₀ alkyl group, a C₁₋₂₀ alkoxy group, an aryl group, and a halogen atom, and R² are each independently a hydrogen atom or a methyl group. p is an integer of 0 or 1 or more, preferably an integer of 0 or 1 to 3, and more preferably 0 or 1. q is an integer of 1 or more and preferably 2 or 3. The position of the substituent on the aromatic ring in the above general formulae may be any position. For example, it is indicated that the naphthalene ring of General Formula (3-2) may be substituted on any ring, General Formula (3-3) may be substituted on any ring of the benzene rings present in one molecule, General Formula (3-4) may be substituted on any ring of the benzene rings present in one molecule, General Formula (3-5) may be substituted on any ring of the benzene rings present in one molecule, and it is indicated that the number of substituents in one molecule is p and q.

As the compound having a phenolic hydroxy group, for example, reaction products with a compound having at least one phenolic hydroxy group in the molecule, a compound represented by any of General Formulae (x-1) to (x-5) below and/or formaldehyde as essential reaction raw materials or the like can also be used. In addition, novolac type phenolic resins with one or two or more compounds having at least one phenolic hydroxy group in the molecule as reaction raw materials or the like can also be used.

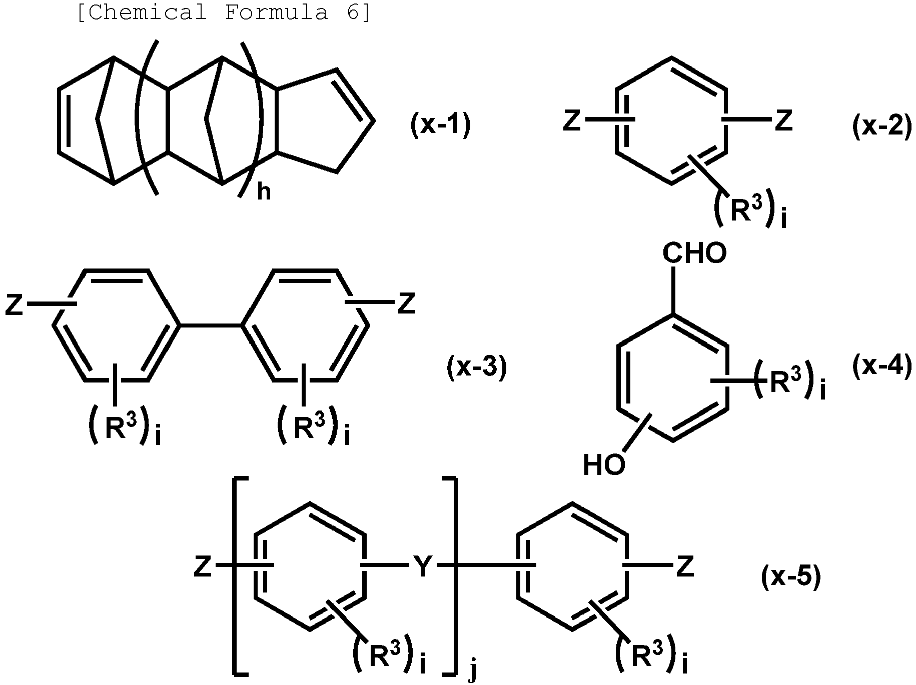

In Formula (x-1), h is 0 or 1. In Formulae (x-2) to (x-5), R³ is any of a C₁₋₂₀ alkyl group, a C₁₋₂₀ alkoxy group, an aryl group, and a halogen atom, and i is an integer of 0 or 1 to 4. In Formulae (x-2), (x-3), and (x-5), Z is any of a vinyl group, a halomethyl group, a hydroxymethyl group, and an alkyloxymethyl group. In Formula (x-5), Y is any of a C₁₋₄ alkylene group, an oxygen atom, a sulfur atom, and a carbonyl group, and j is an integer of 1 to 4.

Specific examples of the compounds represented by General Formulae (3-1) to (3-5) above and the above reaction products include phenol, cresol, xylenol; dialkylphenols such as dimethylphenol and diethylphenol; trialkylphenols such as trimethylphenol and triethylphenol; and diphenylphenol, triphenylphenol, catechol, resorcinol, hydroquinone, 3-methylcatechol, 4-methylcatechol, 4-allylpyrocatechol, tetramethylbisphenol A, 1,2,3-trihydroxybenzene, 1,2,4-trihydroxybenzene, 1-naphthol, 2-naphthol, 1,3-naphthalenediol, 1,5-naphthalenediol, 2,6-naphthalenediol, 2,7-naphthalenediol, polyphenylene ether type diols, polynaphthylene ether type diols, phenol novolac resins, cresol novolac resins, bisphenol novolac type resins, naphthol novolac type resins, phenol aralkyl type resins, naphthol aralkyl type resins, phenolic resins having a cyclo ring structure.

These compounds having a phenolic hydroxy group can be used alone, or two or more can be used in combination.

Examples of the alkylene oxide include ethylene oxide, propylene oxide, butylene oxide, and pentylene oxide. Among these, ethylene oxide or propylene oxide is preferred because it can produce a curable resin composition having excellent work stability and latency and being capable of forming a cured product having excellent heat resistance and substrate adhesion. The alkylene oxide can be used alone, or two or more can be used in combination.

Examples of the alkylene carbonate include ethylene carbonate, propylene carbonate, butylene carbonate, and pentylene carbonate. Among these, ethylene carbonate or propylene carbonate is preferred because it can produce a curable resin composition having excellent work stability and latency and being capable of forming a cured product having excellent heat resistance and substrate adhesion. The alkylene carbonate can be used alone, or two or more can be used in combination.

Examples of the N-alkoxyalkyl (meth)acrylamide compound include N-methoxymethyl (meth)acrylamide, N-ethoxymethyl (meth)acrylamide, N-butoxymethyl (meth)acrylamide, N-methoxyethyl (meth)acrylamide, N-ethoxyethyl (meth)acrylamide, and N-butoxyethyl (meth)acrylamide. The N-alkoxyalkyl (meth)acrylamide compound can be used alone, or two more can be used in combination.

As the polybasic acid anhydride, the same ones as those exemplified as the polybasic acid anhydride described above can be used, and the polybasic acid anhydride can be used alone, or two or more can be used in combination.

As the unsaturated monobasic acid, the same ones as those exemplified as the unsaturated monobasic acid described above can be used, and the unsaturated monobasic acid can be used alone, or two or more can be used in combination.

The method for producing the acrylamide resins having an acid group and a polymerizable unsaturated group is not limited to a particular method, and they may be produced by any method. The production of the acrylamide resins having an acid group and a polymerizable unsaturated group may be performed in an organic solvent as needed, and a basic catalyst and/or an acidic catalyst may be used as needed.

As the organic solvent, the same ones as those exemplified as the organic solvent described above can be used, and the organic solvent can be used alone, or two or more can be used in combination.

As the basic catalyst, the same ones as those exemplified as the basic catalyst described above can be used, and the basic catalyst can be used alone, or two or more can be used in combination.

Examples of the acidic catalyst include inorganic acids such as hydrochloric acid, sulfuric acid, and phosphoric acid; organic acids such as methanesulfonic acid, paratoluenesulfonic acid, and oxalic acid; and Lewis acids such as boron trifluoride, anhydrous aluminum chloride, and zinc chloride. In addition, solid acid catalysts having strong acids such as a sulfonyl group or the like can be used. These acidic catalysts can be used alone, or two or more can be used in combination.

Examples of the ester resins having an acid group and a polymerizable unsaturated group include those obtained by reacting together a compound having a phenolic hydroxy group, an alkylene oxide or alkylene carbonate, an unsaturated monobasic acid, and a polybasic acid anhydride.

As the compound having a phenolic hydroxy group, the same ones as those exemplified as the compound having a phenolic hydroxy group described above can be used, and the compound having a phenolic hydroxy group can be used alone, or two or more can be used in combination.

As the alkylene oxide, the same ones as those exemplified as the alkylene oxide described above can be used. Among these, ethylene oxide or propylene oxide is preferred because it can produce a curable resin composition having excellent work stability and latency and being capable of forming a cured product having excellent heat resistance and substrate adhesion. The alkylene oxide can be used alone, or two or more can be used in combination.

As the alkylene carbonate, the same ones as those exemplified as the alkylene carbonate described above can be used. Among these, ethylene carbonate or propylene carbonate is preferred because it can produce a curable resin composition having excellent work stability and latency and being capable of forming a cured product having excellent heat resistance and substrate adhesion. The alkylene carbonate can be used alone, or two or more can be used in combination.

As the unsaturated monobasic acid, the same ones as those exemplified as the unsaturated monobasic acid described above can be used, and the unsaturated monobasic acid can be used alone, or two or more can be used in combination.

As the polybasic acid anhydride, the same ones as those exemplified as the polybasic acid anhydride described above can be used, and the polybasic acid anhydride can be used alone, or two or more can be used in combination.

The method for producing the ester resins having an acid group and a polymerizable unsaturated group is not limited to a particular method, and they may be produced by any method. The production of ester resins having an acid group and a polymerizable unsaturated group may be performed in an organic solvent as needed, and a basic catalyst and an acidic catalyst may be used as needed.

As the organic solvent, the same ones as those exemplified as the organic solvent described above can be used, and the organic solvent can be used alone, or two or more can be used in combination.

As the basic catalyst, the same ones as those exemplified as the basic catalyst described above can be used, and the basic catalyst can be used alone, or two or more can be used in combination.

As the acidic catalyst, the same ones as those exemplified as the acidic catalyst described above can be used, and the acidic catalyst can be used alone, or two or more can be used in combination.

The content of the resin (A) having an acid group and a polymerizable unsaturated group is preferably in a range of 5 to 95% by mass and more preferably in a range of 20 to 80% by mass in the solid content of the curable resin composition.

The compound (b) is made from the compound (b1) having a heteroatom having an unshared electron pair in the molecule and the metal salt (b2) as essential raw materials, and examples thereof include those in which the compound (b1) and the metal salt (b2) form a complex by a coordinate covalent bond. The compound (b) may be a mixture of the compound (b1) and the metal salt (b2) or, in addition, a mixture of the complex and the mixture.

The compound (b1) may be any one so long as it has one or more heteroatoms having an unshared electron pair selected from the group consisting of nitrogen, oxygen, sulfur and phosphorus in the molecule, and examples thereof include amine compounds such as N-methylmorpholine, pyridine, pyridine-2-carboxylic acid, pyridine-3-carboxylic acid, pyridine-4-carboxylic acid, picolinamide, picolylamine, DL-pipecolinic acid, phenanthroline, 1,8-diazabicyclo[5.4.0]undecene-7 (DBU), 1,5-diazabicyclo[4.3.0]nonene-5 (DBN), 1,4-diazabicyclo[2.2.2]octane (DABCO), 4-dimethylaminoamine (DMAP), dicyandiamide (DICY), tri-n-butylamine, dimethylbenzylamine, butylamine, 1,2-propanediamine, 1,2-cyclohexanediamine, octylamine, monoethanolamine, diethanolamine, triethanolamine, 2-[[(2-dimethylamino)ethyl]methylamino]ethanol, 2,2'-[propane-1,2-diylbis(azanylylidenemethanylylidene)]diphenol, imidazole, 1-methylimidazole, 2-methylimidazole, 4-methylimidazole, 2,4-dimethylimidazole, 1,4-diethylimidazole, 3-aminopropyltrimethoxysilane, 3-aminopropyltriethoxysilane, 3-(N-phenyl)aminopropyltrimethoxysilane, 3-(2-aminoethyl)aminopropyltrimethoxysilane, 3-(2-aminoethyl)aminopropylmethyldimethoxysilane, tetramethylammonium hydroxide, 8-quinolinol, 5-chloro-8-quinolinol, 2,2'-bipyridyl and derivatives thereof, 2,2'-[propane-1,2-diylbis(azanylylidenemethanylylidene)]diphenol and derivatives thereof, and 2,2'-methylenebis[6-(2h-benzotriazol-2-yl)-4-tert-octylphenol]; quaternary ammonium salts such as trioctylmethylammonium chloride and trioctylmethylammonium acetate; phosphine compounds such as trimethylphosphine, tributylphosphine, trioctylphosphine, tri-tert-butylphosphine, triphenylphosphine, tritolyl phosphine, trixylylphosphine, tri-tert-butoxyphenylphosphine, diphenylpyridylphosphine, diphenylcyclohexylphosphine, tricyclohexylphosphine, di-tert-butyl(2-butenyl)phosphine, di-tert-butyl(3-methyl-2-butenyl)phosphine, di-tert-butylphenylphosphine, [4-(N,N-dimethylamino)phenyl]di-tert-butylphosphine, tris(diethylamino)phosphine, bis(diphenylphosphino)ethane, bis(diphenylphosphino)propane, bis(diphenylphosphino)butane, bis(diphenylphosphino)pentane, bis(diphenylphosphino)diphenyl ether, 9,9-dimethyl-4,5-bis(diphenylphosphino)-9H-xanthene, 9,9-dimethyl-4,5-bis(di-tert-butylphosphino)-9H-xanthene, bis(diphenylphosphino)ferrocene, bis(di-iso-propylphosphino)ferrocene, bis(di-tert-butylphosphino)ferrocene, and diphenylphosphinostyrene; phosphonium salts such as tetramethylphosphonium chloride, tetraethylphosphonium chloride, tetrapropylphosphonium chloride, tetrabutylphosphonium chloride, tetrabutylphosphonium bromide, trimethyl(2-hydroxypropyl)phosphonium chloride, triphenylphosphonium chloride, benzylphosphonium chloride, and methyltributylphosphonium dimethyl phosphate; and sulfur-based compounds such as thiolactic acid, 2-aminothiophenol, and 2,2'-dithiodianiline. In addition, tert-butyl isocyanide, adamantyl isocyanide, and the like can also be used. These compounds can be used alone, or two or more can be used in combination. Among these, those having at least one carbon-nitrogen unsaturated bond in one molecule are preferred, and those with a molecular weight of 300 or less are more preferred.

Examples of the metal of the metal salt (b2) include vanadium, manganese, iron, cobalt, nickel, copper, zinc, zirconium, bismuth, rare earths, boron, aluminum, neodymium, and barium. These metals can be used alone, or two or more can be used in combination. Among these, preferred are manganese, iron, copper, zinc, bismuth, rare earths, neodymium, and barium because they can produce a curable resin composition having excellent work stability and latency and being capable of forming a cured product having excellent heat resistance and substrate adhesion.

Examples of the metal salt (b2) include fatty acid metal salts, aromatic carboxylic acid metal salts, and alicyclic carboxylic acid metal salts. These metal salts can be used alone, or two or more can be used in combination. Among these, fatty acid metal salts are preferred because they can produce a curable resin composition having excellent work stability and latency and being capable of forming a cured product having excellent heat resistance and substrate adhesion.

Examples of fatty acids forming the fatty acid metal salts include dimeric acid, trimeric acid, acrylic acid, methacrylic acid, formic acid, octyl acid (2-ethylhexanoic acid), neodecanoic acid, naphthenic acid, isononanoic acid, butyric acid, pentanoic acid, tung oil acid, resin acids, tall oil fatty acids, coconut oil fatty acid, soybean oil fatty acid, linseed oil fatty acid, safflower oil fatty acid, dehydrated castor oil fatty acid, tung oil fatty acid, lauric acid, myristic acid, palmitic acid, stearic acid, isostearic acid, and oleic acid. These fatty acids can be used alone, or two or more can be used in combination. Among these, C₈₋₁₅ fatty acids are preferred because they can produce a curable resin composition having excellent work stability and latency and being capable of forming a cured product having excellent heat resistance and substrate adhesion.

As the fatty acid metal salts, those sold as commercially available products can be used, but they can also be produced as needed. For example, the fatty acid metal salts can be produced by a method of adding a metal hydrate, hydroxide, carbonate, or the like to a fatty acid and then reacting them under a heating condition with stirring. The reaction temperature is usually 40°C to 200°C and preferably 50°C to 150°C. The reaction time is usually 0.5 to 10 hours and preferably 0.5 to 5 hours. The ratio between a fatty acid and a metal atom in preparation amount is preferably in a range of 1.0 to 4.0 mol of the fatty acid relative to 1 mol of the metal atom and more preferably in a range of 1.5 to 3.5 mol. Examples of other methods for producing the fatty acid metal salts include a method of dissolving a fatty acid in water as a water-soluble salt such as a sodium salt, adding a water-soluble metal salt thereto, performing an ion exchange reaction called double decomposition, and performing washing with water, dehydration, and filtering.

The use amount of the metal salt (b2) is preferably in a range of 0.3 to 11 mol, more preferably in a range of 0.5 to 8 mol, and particularly preferably in a range of 0.5 to 5 mol relative to 1 mol of the compound (b1) based on the molar number of the metal of the metal salt (b2) because it can produce a curable resin composition having excellent work stability and latency and being capable of forming a cured product having excellent heat resistance and substrate adhesion.

The content of the compound (B) is preferably 5 parts by mass or less, more preferably in a range of 0.05 to 5 parts by mass, and particularly preferably in a range of 0.1 to 5 parts by mass in terms of solid content relative to 100 parts by mass of the solid content of the resin (A) because it can produce a curable resin composition having excellent work stability and latency and being capable of forming a cured product having excellent heat resistance and substrate adhesion.

The method for producing the curable resin composition of the present invention is not limited to a particular method, and it may be produced by any method. Examples of the method include a method of mixing together components to be blended to produce it. The method of mixing is not limited to a particular method, and paint shakers, dispersers, roll mills, bead mills, ball mills, attritors, sand mills, bead mills, or the like may be used.

The curable resin composition of the present invention can also contain a curing agent (C) as needed.

Examples of the curing agent (C) include epoxy resins, polybasic acids, unsaturated monobasic acids, amine compounds, amide compounds, azo compounds, organic peroxides, and polyol compounds.

As the epoxy resin, the same ones as those exemplified as the epoxy resin described above can be used, and the epoxy resin can be used alone, or two or more can be used in combination.

Examples of the polybasic acids include oxalic acid, malonic acid, succinic acid, glutaric acid, adipic acid, pimelic acid, suberic acid, azelaic acid, sebacic acid, maleic acid, fumaric acid, phthalic acid, isophthalic acid, terephthalic acid, tetrahydrophthalic acid, hexahydrophthalic acid, methylhexahydrophthalic acid, citraconic acid, itaconic acid, glutaconic acid, 1,2,3,4-butane tetracarboxylic acid, cyclohexane tricarboxylic acid, cyclohexane tetracarboxylic acid, bicyclo[2.2.1]heptane-2,3-dicarboxylic acid, methyl bicyclo[2.2.1]heptane-2,3-dicarboxylic acid, 4-(2,5-dioxotetrahydrofuran-3-yl)-1,2,3,4-tetrahydronaphthalene-1,2-dicarboxylic acid, trimellitic acid, pyromellitic acid, naphthalene dicarboxylic acid, naphthalene tricarboxylic acid, naphthalene tetracarboxylic acid, biphenyldicarboxylic acid, biphenyltricarboxylic acid, biphenyltetracarboxylic acid, and benzophenone tetracarboxylic acid. As the polybasic acid, for example, copolymers of a conjugated diene-based vinyl monomer and acrylonitrile, the copolymers having a carboxy group in the molecule, can also be used. These polybasic acids can be used alone, or two or more can be used in combination.

As the unsaturated monobasic acid, the same ones as those exemplified as the unsaturated monobasic acid described above can be used, and the unsaturated monobasic acid can be used alone, or two or more can be used in combination.

Examples of the amine compounds include diaminodiphenylmethane, diethylenetriamine, triethylenetetramine, diaminodiphenylsulfone, isophoronediamine, imidazole, BF3-amine complexes, and guanidine derivatives. These amine compounds can be used alone, or two or more can be used in combination.

Examples of the amide-based compounds include dicyandiamide and polyamide resins synthesized from dimers of linolenic acid and ethylenediamine. These amide compounds can be used alone, or two or more can be used in combination.

Examples of the azo compounds include azobisisobutyronitrile.

Examples of the organic peroxides include ketone peroxides, peroxyketals, hydroperoxides, dialkyl peroxides, diacyl peroxides, peroxyesters, peroxydicarbonates, and alkyl peroxycarbonates. These organic peroxides can be used alone, or two or more can be used in combination.

Examples of the polyol compounds include polyol monomers such as ethylene glycol, diethylene glycol, propylene glycol, 1,3-propanediol, 1,4-butanediol, 1,3-butanediol, 3-methyl-1,3-butanediol, 1,5-pentanediol, neopentyl glycol, 1,6-hexanediol, glycerin, glycerin mono(meth)acrylate, trimethylolethane, trimethylolmethane mono(meth)acrylate, trimethylolpropane, trimethylolpropane mono(meth)acrylate, pentaerythritol mono(meth)acrylate, and pentaerythritol di(meth)acrylate; polyester polyols obtained by co-condensation between the above polyol monomers and dicarboxylic acids such as succinic acid, adipic acid, azelaic acid, sebacic acid, terephthalic acid, isophthalic acid, orthophthalic acid, tetrahydrophthalic acid, hexahydrophthalic acid, maleic acid, fumaric acid, citraconic acid, itaconic acid, glutaconic acid, and 1,4-cyclohexanedicarboxylic acid; lactone type polyester polyols obtained by a polycondensation reaction between the above polyol monomers and various lactones such as ε-caprolactone, δ-valerolactone, and 3-methyl-6-valerolactone; and polyether polyols obtained by ring-opening polymerization between the above polyol monomers and cyclic ether compounds such as ethylene oxide, propylene oxide, tetrahydrofuran, ethyl glycidyl ether, and propyl glycidyl ether. These polyol compounds can be used alone, or two or more can be used in combination.

These curing agents (C) can be used alone, or two or more can be used in combination. Among these, the epoxy resins are preferred because they can produce a curable resin composition having excellent work stability and latency and being capable of forming a cured product having excellent heat resistance and substrate adhesion.

The content of the curing agent (C) is preferably in a range of 5 to 60 parts by mass, more preferably in a range of 10 to 50 parts by mass, and particularly preferably in a range of 20 to 40 parts by mass relative to 100 parts by mass of the solid content of the resin (A) because it can produce a curable resin composition having excellent work stability and latency and being capable of forming a cured product having excellent heat resistance and substrate adhesion.

The active energy ray curable resin composition of the present invention includes the curable resin composition and a photopolymerization initiator.

Examples of the photopolymerization initiator include photo radical polymerization initiators such as 1-hydroxycyclohexyl phenyl ketone, 2-hydroxy-2-methyl-1-phenylpropan-1-one, 1-[4-(2-hydroxyethoxy)phenyl]-2-hydroxy-2-methyl-1-propan-1-one, thioxanthone and thioxanthone derivatives, 2,2'-dimethoxy-1,2-diphenylethan-1-one, diphenyl(2,4,6-trimethoxybenzoyl)phosphine oxide, 2,4,6-trimethylbenzoyl diphenylphosphine oxide, bis(2,4,6-trimethylbenzoyl)phenylphosphine oxide, 2-methyl-1-(4-methylthiophenyl)-2-morpholinopropan-1-one, and 2-benzyl-2-dimethylamino-1-(4-morpholinophenyl)-1-butanone.

Examples of commercially available product of the other photopolymerization initiators include "Omnirad 1173", "Omnirad 184", "Omnirad 127", "Omnirad 2959", "Omnirad 369", "Omnirad 379", "Omnirad 907", "Omnirad 4265", "Omnirad 1000", "Omnirad 651", "Omnirad TPO", "Omnirad 819", "Omnirad 2022", "Omnirad 2100", "Omnirad 754", "Omnirad 784", "Omnirad 500", and "Omnirad 81" (manufactured by IGM Resins B.V.); "KAYACURE DETX", "KAYACURE MBP", "KAYACURE DMBI", "KAYACURE EPA", and "KAYACURE OA" (manufactured by Nippon Kayaku Co., Ltd.); "Vicure 10" and "Vicure 55" (manufactured by Stoffa Chemical); "Trigonal P1" (manufactured by Akzo Nobel N.V.); "SANDORAY 1000" (manufactured by Sandoz); "DEAP" (manufactured by Upjohn Chemical Corporation); "Quantacure PDO", "Quantacure ITX", and "Quantacure EPD" (manufactured by Ward Blenkinsop & Co. Ltd.); and "Runtecure 1104" (manufactured by Runtec Chemical Co. Ltd.). These photopolymerization initiators can be used alone, or two or more can be used in combination.

The addition amount of the photopolymerization initiator is, for example, preferably in a range of 0.05 to 15% by mass and more preferably in a range of 0.1 to 10% by mass in the total of the components of the active energy ray curable resin composition other than the solvent.

The photopolymerization initiator can be combined with photosensitizers such as amine compounds, urea compounds, sulfur-containing compounds, phosphorus-containing compounds, chlorine-containing compounds, and nitrile compounds as needed.

The active energy ray curable resin composition of the present invention may contain other resin components other than the resin (A) and the resin (B). Examples of the other resin components include various types of (meth)acrylate monomers.

Examples of the various types of (meth)acrylate monomers include mono(meth)acrylate compounds such as aliphatic mono(meth)acrylate compounds such as methyl (meth)acrylate, ethyl (meth)acrylate, propyl (meth)acrylate, butyl (meth)acrylate, pentyl (meth)acrylate, hexyl (meth)acrylate, 2-ethylhexyl (meth)acrylate, and octyl (meth)acrylate; alicyclic mono(meth)acrylate compounds such as cyclohexyl (meth)acrylate, isobornyl (meth)acrylate, and adamantyl mono(meth)acrylate; heterocyclic mono(meth)acrylate compounds such as glycidyl (meth)acrylate and tetrahydrofurfuryl acrylate; and aromatic mono(meth)acrylate compounds such as benzyl (meth)acrylate, phenyl (meth)acrylate, phenylbenzyl (meth)acrylate, phenoxy (meth)acrylate, phenoxyethyl (meth)acrylate, phenoxyethoxyethyl (meth)acrylate, 2-hydroxy-3-phenoxypropyl (meth)acrylate, phenoxybenzyl (meth)acrylate, and phenylphenoxyethyl (meth)acrylate; (poly)oxyalkylene-modified mono(meth)acrylate compounds in which a polyoxyalkylene chain such as a (poly)oxyethylene chain, a (poly)oxypropylene chain, or a (poly)oxytetramethylene chain is introduced into the molecular structure of the various types of mono(meth)acrylate monomers; lactone-modified mono(meth)acrylate compounds in which a (poly)lactone structure is introduced into the molecular structure of the various types of mono(meth)acrylate compounds; aliphatic di(meth)acrylate compounds such as ethylene glycol di(meth)acrylate, propylene glycol di(meth)acrylate, butanediol di(meth)acrylate, hexanediol di(meth)acrylate, and neopentyl glycol di(meth)acrylate; alicyclic di(meth)acrylate compounds such as 1,4-cyclohexanedimethanol di(meth)acrylate, norbornane di(meth)acrylate, norbornane dimethanol di(meth)acrylate, dicyclopentanyl di(meth)acrylate, and tricyclodecane dimethanol di(meth)acrylate; aromatic di(meth)acrylate compounds such as biphenol di(meth)acrylate and bisphenol di(meth)acrylate; polyoxyalkylene-modified di(meth)acrylate compounds in which a polyoxyalkylene chain such as a (poly)oxyethylene chain, a (poly)oxypropylene chain, or a (poly)oxytetramethylene chain is introduced into the molecular structure of the various types of di(meth)acrylate compounds; lactone-modified di(meth)acrylate compounds in which a (poly)lactone structure is introduced into the molecular structure of the various types of di(meth)acrylate compounds; aliphatic tri(meth)acrylate compounds such as trimethylolpropane tri(meth)acrylate and glycerin tri(meth)acrylate; (poly)oxyalkylene-modified tri(meth)acrylate compounds in which a polyoxyalkylene chain such as a (poly)oxyethylene chain, a (poly)oxypropylene chain, or a (poly)oxytetramethylene chain is introduced into the molecular structure of the aliphatic tri(meth)acrylate compounds; lactone-modified tri(meth)acrylate compounds in which a (poly)lactone structure is introduced into the molecular structure of the aliphatic tri(meth)acrylate compounds; tetra- or more functional aliphatic poly(meth)acylate compounds such as pentaerythritol tetra(meth)acrylate, ditrimethylolpropane tetra(meth)acrylate, and dipentaerythritol hexa(meth)acrylate; tetra- or more functional (poly)oxyalkylene-modified (meth)acrylate compounds in which a polyoxyalkylene chain such as a (poly)oxyethylene chain, a (poly)oxypropylene chain, or a (poly)oxytetramethylene chain is introduced into the molecular structure of the aliphatic poly(meth)acylate compounds; and tetra- or more functional lactone-modified poly(meth)acrylate compounds in which a (poly)lactone structure is introduced into the molecular structure of the aliphatic poly(meth)acylate compounds.

As the other (meth)acrylate monomers, apart from those described above, (meth)acrylate monomers made from a phenol compound, a cyclic carbonate compound or cyclic ether compound, and an unsaturated monocarboxylic acid as essential reaction raw materials can be used.

Examples of the phenol compound include cresol, xylenol, catechol, resorcinol, hydroquinone, 3-methylcatechol, 4-methylcatechol, 4-allylpyrocatechol, 1,2,3-trihydroxybenzene, 1,2,4-trihydroxybenzene, 1 naphthol, 2-naphthol, 1,3-naphthalenediol, 1,5-naphthalenediol, 2,6-naphthalenediol, 2,7-naphthalenediol, hydrogenated bisphenol, hydrogenated biphenol, polyphenylene ether type diols, polynaphthylene ether type diols, phenol novolac resins, cresol novolac resins, bisphenol novolac type resins, naphthol novolac type resins, phenol aralkyl type resins, naphthol aralkyl type resins, and phenolic resins having a cyclo ring structure.

Examples of the cyclic carbonate compound include ethylene carbonate, propylene carbonate, butylene carbonate, and pentylene carbonate. These cyclic carbonate compounds can be used alone, or two or more can be used in combination.

Examples of the cyclic ether compound include ethylene oxide, propylene oxide, and tetrahydrofuran. These cyclic ether compounds can be used alone, or two or more can be used in combination.

As the unsaturated monocarboxylic acid, the same ones as those exemplified as the unsaturated monobasic acid described above can be used.

The content of the other (meth)acrylate monomers is preferably 90 % by mass or less in the nonvolatile content of the active energy ray curable resin composition of the present invention.

The active energy ray curable resin composition of the present invention can also contain various types of additives such as curing accelerators, ultraviolet absorbers, polymerization inhibitors, antioxidants, organic solvents, inorganic fillers or polymer particles, pigments, defoaming agents, viscosity adjusting agents, leveling agents, flame retardants, and storage stabilizers as needed.

The curing accelerators promote a curing reaction, and examples thereof include phosphorus-based compounds, amine-based compounds, imidazoles, organic acid metal salts, Lewis acids, and amine complex salts. These curing accelerators can be used alone, or two or more can be used in combination. The addition amount of the curing accelerators is, for example, preferably in a range of 0.01 to 10% by mass in the solid content of the active energy ray curable resin composition.

Examples of the ultraviolet absorbers include triazine derivatives such as 2-[4-{(2-hydroxy-3-dodecyloxypropyl)oxy}-2-hydroxyphenyl]-4,6-bis(2,4-dimethylphenyl)-1,3,5-triazine and 2-[4-{(2-hydroxy-3-tridecyloxypropyl)oxy}-2-hydroxyphenyl]-4,6-bis(2,4-dimethylphenyl)-1,3,5-triazine, 2-(2'-xanthenecarboxy-5'-methylphenyl)benzotriazole, 2-(2'-o-nitrobenzyloxy-5'-methylphenyl)benzotriazole, 2-xanthenecarboxy-4-dodecyloxybenzophenone, and 2-o-nitrobenzyloxy-4-dodecyloxybenzophenone. These ultraviolet absorbers can be used alone, or two or more can be used in combination.

Examples of the polymerization inhibitors include phenol compounds such as p-methoxyphenol, p-methoxycresol, 4-methoxy-1-naphthol, 4,4'-dialkoxy-2,2'-bi-1-naphthol, 3-(N-salicyloyl)amino-1,2,4-triazole, N'1,N'12-bis(2-hydroxybenzoyl)dodecanedihydrazide, styrenated phenol, N-isopropyl-N'-phenylbenzene-1,4-diamine, and 6-ethoxy-2,2,4-trimethyl-1,2-dihydroquinoline; quinone compounds such as hydroquinone, methylhydroquinone, p-benzoquinone, methyl-p-benzoquinone, 2,5-diphenylbenzoquinone, 2-hydroxy-1,4-naphthoquinone, anthraquinone, and diphenoquinone; amine compounds such as melamine, p-phenylenediamine, 4-aminodiphenylamine, N,N'-diphenyl-p-phenylenediamine, N-i-propyl-N'-phenyl-p-phenylenediamine, N-(1,3-dimethylbutyl)-N'-phenyl-p-phenylenediamine, diphenylamine, 4,4'-dicumyl-diphenylamine, 4,4'-dioctyl-diphenylamine, poly(2,2,4-trimethyl-1,2-dihydroquinoline), styrenated diphenylamine, reaction products of styrenated diphenylamine and 2,4,4-trimethylpentene, and reaction products of diphenylamine and 2,4,4-trimethylpentene; thioether compounds such as phenothiazine, distearyl thiodipropionate, 2,2-bis({[3-(dodecylthio)propionyl]oxy}methyl)-1,3-propanediyl=bis[3-(dodecylthio)propionate], and ditridecan-1-yl=3,3'-sulfanediyl dipropanoate; nitroso compounds such as N-nitrosodiphenylamine, N-nitrosophenylnaphthylamine, p-nitrosophenol, nitrosobenzene, p-nitrosodiphenylamine, α-nitroso-β-naphthol and the like, N,N-dimethyl-p-nitrosoaniline, p-nitrosodiphenylamine, p-nitrosodimethylamine, p-nitroso-N,N-diethylamine, N-nitrosoethanolamine, N-nitroso-di-n-butylamine, N-nitroso-N-n-butyl-4-butanolamine, N-nitroso-diisopropanolamine, N-nitroso-N-ethyl-4-butanolamine, 5-nitroso-8-hydroxyquinoline, N-nitrosomorpholine, N-nitroso-N-phenylhydroxylamine ammonium salt, nitrosobenzene, N-nitroso-N-methyl-p-toluenesulfonamide, N-nitroso-N-ethylurethane, N-nitroso-N-n-propylurethane, 1-nitroso-2-naphthol, 2-nitroso-1-naphthol, sodium 1-nitroso-2-naphthol-3,6-sulfonate, sodium 2-nitroso-1-naphthol-4-sulfonate, 2-nitroso-5-methylaminophenol hydrochloride, and 2-nitroso-5-methylaminophenol hydrochloride; phosphite compounds such as an ester of phosphoric acid and octadecan-1-ol, triphenyl phosphite, 3,9-dioctadecan-1-yl-2,4,8,10-tetraoxa-3,9-diphosphaspiro[5.5]undecane, tris(nonylphenyl) phosphite, phosphite-(1-methylethylidene)-di-4,1-phenylene tetra-C12-15-alkyl esters, 2-ethylhexyl=diphenyl=phosphite, diphenylisodecylphosphite, triisodecyl=phosphite, and tris(2,4-di-tert-butylphenyl) phosphite; zinc compounds such as zinc bis(dimethyldithiocarbamato-κ(2)S,S'), zinc diethyldithiocarbamate, and zinc dibutyldithiocarbamate; nickel compounds such as nickel bis(N,N-dibutylcarbamodithioato-S,S'); and sulfur compounds such as 1,3-dihydro-2H-benzimidazole-2-thione, 4,6-bis(octylthiomethyl)-o-cresol, 2-methyl-4,6-bis[(octan-1-ylsulfanyl)methyl]phenol, dilauryl thiodipropionate, and distearyl 3,3'-thiodipropionate. These polymerization inhibitors can be used alone, or two or more can be used in combination.

As the antioxidants, the same ones as the compounds exemplified in the polymerization inhibitors can be used, and the antioxidants can be used alone, or two or more can be used in combination.

Examples of commercially available products of the polymerization inhibitors and the antioxidants include "Q-1300" and "Q-1301" manufactured by Wako Pure Chemical Corporation and "Sumilizer BBM-S" and "Sumilizer GA-80" manufactured by Sumitomo Chemical Co., Ltd.

As the organic solvent, the same ones as those exemplified as the organic solvent described above can be used, and the organic solvent can be used alone, or two or more can be used in combination.

Examples of the inorganic fillers include fused silica, crystalline silica, alumina, silicon nitride, and aluminum hydroxide.

As the pigments, known and customary inorganic pigments and organic pigments can be used.

Examples of the inorganic pigments include white pigments, antimony red, red oxide, cadmium red, cadmium yellow, cobalt blue, Prussian blue, ultramarine blue, carbon black, and graphite. These inorganic pigments can be used alone, or two or more can be used in combination.

Examples of the white pigments include titanium oxide, zinc oxide, magnesium oxide, zirconium oxide, aluminum oxide, barium sulfate, silica, talc, mica, aluminum hydroxide, calcium silicate, aluminum silicate, hollow resin particles, and zinc sulfide.

Examples of the organic pigments include quinacridone pigments, quinacridonequinone pigments, dioxazine pigments, phthalocyanine pigments, anthrapyrimidine pigments, anthanthrone pigments, indanthrone pigments, flavanthrone pigments, perylene pigments, diketopyrrolopyrrole pigments, perinone pigments, quinophthalone pigments, anthraquinone pigments, thioindigo pigments, benzimidazolone pigments, and azo pigments. These organic pigments can be used alone, or two or more can be used in combination.

Examples of the flame retardants include inorganic phosphorus compounds such as red phosphorus, ammonium phosphates such as monoammonium phosphate, diammonium phosphate, triammonium phosphate, and ammonium polyphosphate, and amide phosphate; organic phosphorus compounds such as phosphate ester compounds, phosphonic acid compounds, phosphinic acid compounds, phosphine oxide compounds, phosphorane compounds, organic nitrogen-containing phosphorus compounds, cyclic organic phosphorus compounds such as 9,10-dihydro-9-oxa-10-phosphaphenanthrene-10-oxide, 10-(2,5-dihydrooxyphenyl)-10H-9-oxa-10-phosphaphenanthrene-10-oxide, and 10-(2,7-dihydroxynaphthyl)-10H-9-oxa-10-phosphaphenanthrene-10-oxide, and derivatives obtained by reacting them with compounds such as an epoxy resin or a phenolic resin; nitrogen-based flame retardants such as triazine compounds, cyanuric acid compounds, isocyanuric acid compounds, and phenothiazine; silicone-based flame retardants such as silicone oils, silicone rubbers, and silicone resins; and inorganic flame retardants such as metal hydroxides, metal oxides, metal carbonate compounds, metal powders, boron compounds, and low-melting point glasses. These flame retardants can be used alone, or two or more can be used in combination. When these flame retardants are used, they are preferably in a range of 0.1 to 20% by mass in the entire resin composition.

The cured product of the present invention can be obtained by irradiating the active energy ray curable resin composition with active energy rays. Examples of the active energy rays include ultraviolet rays, electron beams, and ionizing radiation such as alpha rays, beta rays, and gamma rays. When ultraviolet rays are used as the active energy rays, they may be applied in an inert gas atmosphere such as nitrogen gas or applied in an air atmosphere in order to efficiently perform a curing reaction by the ultraviolet rays.

As a generation source of the ultraviolet rays, ultraviolet lamps are commonly used for practical and economic reasons. Specifically, examples thereof include low-pressure mercury lamps, high-pressure mercury lamps, ultrahigh-pressure mercury lamps, xenon lamps, gallium lamps, metal halide lamps, sunlight, and light-emitting diodes (LEDs).

The integrated light intensity of the active energy rays is not limited to a particular value but is preferably 0.1 to 50 kJ/m² and more preferably 0.5 to 10 kJ/m². When the integrated light intensity is within the above range, the occurrence of uncured portions can be prevented or inhibited, which is preferred.

The application of the active energy rays may be performed in one step or performed separately in two or more steps.

The article of the present invention has a coating film formed of the cured product. Examples of the article include plastic molded products such as cellular phones, home appliances, automobile interior and exterior materials, and office automation (OA) appliances, semiconductor devices, display devices, and imaging devices.

### [Examples]

The following describes the present invention specifically by examples and comparative examples. The present invention is not limited to the examples described below.

### (Synthesis Example 1: Preparation of Resin (A1) Having Acid Group and Polymerizable Unsaturated Group)

Into a flask equipped with a thermometer, a stirrer, and a reflux cooler, 123 parts by mass of diethylene glycol monomethyl ether acetate was introduced, 214 parts by mass of an ortho-cresol type novolac epoxy resin "EPICLON N-680" (manufactured by DIC Corporation, softening point: 86°C, epoxy equivalent: 214 g/eq) (hereinafter, referred to as an epoxy resin (1)) was dissolved therein, 0.9 part by mass of dibutylhydroxytoluene and 0.2 part by mass of methoquinone were added thereto, and then 72 parts by mass of acrylic acid and 1.4 parts by mass of triphenylphosphine were added thereto, which were reacted at 120°C for 10 hours while blowing air thereinto. Next, 72 parts by mass of diethylene glycol monomethyl ether acetate and 76 parts by mass of tetrahydrophthalic anhydride were added thereto and were reacted at 110°C for 3 hours to obtain a resin (A1) having an acid group and a polymerizable unsaturated group. The nonvolatile content of this resin (A1) having an acid group and a polymerizable unsaturated group was 65% by mass, and the solid acid value thereof was 80 mg KOH/g.

### (Synthesis Example 2: Preparation of Resin (A2) Having Acid Group and Polymerizable Unsaturated Group)

Added to a flask equipped with a thermometer, a stirrer, and a reflux cooler were 104 parts by mass of a novolac type phenolic resin ("PHENOLITE TD-2093" manufactured by DIC Corporation, phenolic hydroxy equivalent: 104 g/eq), 53.6 parts by mass of propylene carbonate, and 1.1 parts by mass of a 50% aqueous potassium hydroxide solution, and the temperature of the system was raised up to 170°C in a nitrogen atmosphere. While foaming was observed, 53.6 parts by mass of propylene carbonate was added thereto in portions and was reacted for 10 hours to obtain a polyol resin (1). The hydroxy equivalent of this polyol resin (1) was 172 g/eq. Next, added thereto were 143 parts by mass of toluene, 172 parts by mass of the obtained polyol resin (1), 41 parts by mass of acrylic acid, 6.4 parts by mass of paratoluenesulfonic acid, and 1.1 parts by mass of methoquinone, and air was blown into the mixture, which was reacted for 20 hours while being refluxed under reduced pressure at 85°C with stirring. Subsequently, the system was cooled to 50°C, and the obtained reaction solution was washed with water. Added thereto were 111 parts by mass of diethylene glycol monomethyl ether acetate, 0.5 part by mass of dibutylhydroxytoluene, and 0.1 part by mass of methoquinone, and toluene was removed at 80°C. Next, 57.8 parts by mass of tetrahydrophthalic anhydride and 1.0 part by mass of triphenylphosphine were added thereto and were reacted at 110°C for 8 hours to obtain a resin (A2) having an acid group and a polymerizable unsaturated group. The nonvolatile content of this resin (A2) having an acid group and a polymerizable unsaturated group was 70% by mass, and the solid acid value thereof was 79 mg KOH/g.

### (Synthesis Example 3: Preparation of Metal Salt (1))

At 80°C, 44.7 parts by mass of neodecanoic acid and 9.3 parts by mass of sodium hydroxide were reacted, and 20.0 parts by mass of manganese sulfate was added thereto and was reacted at 80°C. After washing sodium sulfate as a by-product with water, the reactant was dehydrated under reduced pressure at 130°C, and 37.5 parts by mass of benzyl alcohol was added thereto to obtain 93.6 parts by mass of a manganese neodecanoate solution [a metal salt (1)]. The manganese content in the obtained metal salt (1) was 6.84% by mass.

### (Synthesis Example 4: Preparation of Metal Salt (2))

At 80°C, 42.6 parts by mass of neodecanoic acid and 7.1 parts by mass of sodium hydroxide were reacted, and 21.8 parts by mass of ferrous sulfate was added thereto and was reacted at 80°C. After washing sodium sulfate as a by-product with water, the reactant was dehydrated under reduced pressure at 130°C, and 41.7 parts by mass of a petroleum-based hydrocarbon was added thereto to obtain 84.1 parts by mass of an iron neodecanoate solution [a metal salt (2)]. The iron content in the obtained metal salt (2) was 5% by mass.

### (Synthesis Example 5: Preparation of Metal Salt (3))

At 130°C, 319.0 parts by mass of 2-ethylhexanoic acid and 100.0 parts by mass of cobalt hydroxide were reacted, the reactant was dehydrated under reduced pressure at 130°C, and then 134.2 parts by mass of a petroleum-based hydrocarbon was added thereto to obtain 502.3 parts by mass of a cobalt 2-ethylhexanoate solution [a metal salt (3)]. The cobalt content in the obtained metal salt (3) was 12% by mass.

### (Synthesis Example 6: Preparation of Metal Salt (4))

At 80°C, 217.1 parts by mass of neodecanoic acid and 36.0 parts by mass of sodium hydroxide were reacted, and 100.0 parts by mass of copper sulfate was further added thereto and was reacted at 80°C. After washing sodium sulfate as a by-product with water, the reactant was dehydrated under reduced pressure at 130°C, and 76.2 parts by mass of a petroleum-based hydrocarbon was added thereto to obtain 301.6 parts by mass of a copper neodecanoate solution [a metal salt (4)] . The copper content in the obtained metal salt (4) was 8% by mass.

### (Synthesis Example 7: Preparation of Metal Salt (5))

At 120°C, 277.0 parts by mass of 2-ethylhexanoic acid and 100.0 parts by mass of zinc oxide were reacted, and the reactant was dehydrated under reduced pressure at 120°C to obtain 354.5 parts by mass of zinc 2-ethylhexanoate [a metal salt (5)] . The zinc content in the obtained metal salt (5) was 22% by mass.

### (Synthesis Example 8: Preparation of Metal Salt (6))

At 130°C, 330.6 parts by mass of 2-ethylhexanoic acid and 125.0 parts by mass of bismuth oxide were reacted, and the reactant was dehydrated under reduced pressure at 130°C to obtain 439.5 parts by mass of bismuth 2-ethylhexanoate [a metal salt (6)]. The bismuth content in the obtained metal salt (6) was 25% by mass.

### (Synthesis Example 9: Preparation of Metal Salt (7))

At 80°C, 44.3 parts by mass of 2-ethylhexanoic acid and 11.8 parts by mass of sodium hydroxide were reacted at 80°C, 69.0 parts by mass of a rare earth chloride solution was further added thereto, and the reactant was dehydrated under reduced pressure at 130°C, and then 155.8 parts by mass of a petroleum-based hydrocarbon, 11.3 parts by mass of 2-ethylhexanoic acid, and 5.1 parts by mass of butyl diglycol were added thereto to obtain 218.5 parts by mass of a rare earth 2-ethylhexanoate solution [a metal salt (7)]. The cerium content in the obtained metal salt (7) was 6% by mass.

### (Synthesis Example 10: Preparation of Metal Salt (8))

At 110°C, 223.9 parts by mass of 2-ethylhexanoic acid and 150.0 parts by mass of barium oxide were reacted, the reactant was dehydrated under reduced pressure at 90°C, and then 127.7 parts by mass of a petroleum-based hydrocarbon and 12.8 parts by mass of butyl diglycol were added thereto to obtain 418.5 parts by mass of a barium 2-ethylhexanoate solution [a metal salt (8)] . The barium content in the obtained metal salt (8) was 15% by mass.

### (Synthesis Example 11: Preparation of Metal Salt (9))

At 130°C, 224.8 parts by mass of neodecanoic acid and 60.0 parts by mass of neodymium oxide were reacted, the reactant was dehydrated under reduced pressure at 130°C, and then 306.9 parts by mass of cyclohexane was added thereto to obtain 570.0 parts by mass of a neodymium neodecanoate solution [metal salt (9)] . The neodymium content in the obtained metal salt (9) was 8.8% by mass.

### (Synthesis Example 12: Preparation of Metal Salt (10))

At 115°C, 131.5 parts by mass of 2-ethylhexanoic acid and 200.0 parts by mass of zirconium carbonate were reacted, the reactant was dehydrated under reduced pressure at 90°C, and then 61.3 parts by mass of a petroleum-based hydrocarbon was added thereto to obtain 247.5 parts by mass of a zirconium 2-ethylhexanoate solution [a metal salt (10)]. The zirconium content in the obtained metal salt (10) was 24% by mass.

### (Synthesis Example 13: Preparation of Compound (B1))

Added to a flask equipped with a thermometer, a stirrer, and a reflux cooler were 41 parts by mass of 1-methylimidazole (molecular weight: 82.1 g/mol) and 417.5 parts by mass of the metal salt (6) obtained in Synthesis Example 8, and the mixture was stirred at 70°C for 1 hour to obtain a target compound (B1). The molar number of 1-methylimidazole relative to 1 mol of the metal of the metal salt (6) was 1.0.

### (Synthesis Example 14: Preparation of Compound (B2))

Added to a flask equipped with a thermometer, a stirrer, and a reflux cooler were 41 parts by mass of 2-methylimidazole (molecular weight: 82.1 g/mol) and 818.3 parts by mass of the metal salt (9) obtained in Synthesis Example 11, and the mixture was stirred at 70°C for 1 hour to obtain a target compound (B2). The molar number of 2-methylimidazole relative to 1 mol of the metal of the metal salt (9) was 1.0.

### (Synthesis Example 15: Preparation of Compound (B3))

Added to a flask equipped with a thermometer, a stirrer, and a reflux cooler were 41 parts by mass of 4-methylimidazole (molecular weight: 82.1 g/mol) and 245.1 parts by mass of the metal salt (3) obtained in Synthesis Example 5, and the mixture was stirred at 70°C for 1 hour to obtain a target compound (B3). The molar number of 4-methylimidazole relative to 1 mol of the metal of the metal salt (3) was 1.0.

### (Synthesis Example 16: Preparation of Compound (B4))

Added to a flask equipped with a thermometer, a stirrer, and a reflux cooler were 29.4 parts by mass of the metal salt (1) obtained in Synthesis Example 3, 211.7 parts by mass of benzyl alcohol, and 9.0 parts by mass of picolinic acid, which were reacted at 50°C for 1 hour to obtain 250.1 parts by mass of a complex solution of manganese neodecanoate and picolinic acid. Next, 6 parts by mass of 4-methylimidazole was added thereto, and the mixture was stirred at 70°C for 1 hour to obtain a target compound (B4). The molar number of picolinic acid and 4-methylimidazole relative to 1 mol of the metal of the metal salt (1) was 2.0.

### (Synthesis Example 17: Preparation of Compound (B5))

Added to a flask equipped with a thermometer, a stirrer, and a reflux cooler were 41 parts by mass of 4-methylimidazole and 189.8 parts by mass of the metal salt (10) obtained in Synthesis Example 12, and the mixture was stirred at 70°C for 1 hour to obtain a target compound (B5). The molar number of 4-methylimidazole relative to 1 mol of the metal of the metal salt (10) was 1.0.

### (Synthesis Example 18: Preparation of Compound (B6))

Added to a flask equipped with a thermometer, a stirrer, and a reflux cooler were 41 parts by mass of 4-methylimidazole and 148.5 parts by mass of the metal salt (5) obtained in Synthesis Example 7, and the mixture was stirred at 70°C for 1 hour to obtain a target compound (B6). The molar number of 4-methylimidazole relative to 1 mol of the metal of the metal salt (5) was 1.0.

### (Synthesis Example 19: Preparation of Compound (B7))

Added to a flask equipped with a thermometer, a stirrer, and a reflux cooler were 41 parts by mass of 4-methylimidazole and 1,166.1 parts by mass of the metal salt (7) obtained in Synthesis Example 9, and the mixture was stirred at 70°C for 1 hour to obtain a target compound (B7). The molar number of 4-methylimidazole relative to 1 mol of the metal of the metal salt (7) was 1.0.

### (Synthesis Example 20: Preparation of Compound (B8))

Added to a flask equipped with a thermometer, a stirrer, and a reflux cooler were 76 parts by mass of diazabicycloundecene (molecular weight: 152.2 g/mol) and 457.7 parts by mass of the metal salt (8) obtained in Synthesis Example 10, and the mixture was stirred at 70°C for 1 hour to obtain a target compound (B8). The molar number of diazabicycloundecene relative to 1 mol of the metal of the metal salt (8) was 1.0.

### (Synthesis Example 21: Preparation of Compound (B9))

Added to a flask equipped with a thermometer, a stirrer, and a reflux cooler were 29.4 parts by mass of the metal salt (1) obtained in Synthesis Example 3, 211.7 parts by mass of benzyl alcohol, and 9.0 parts by mass of picolinic acid, which were reacted at 50°C for 1 hour to obtain 250.1 parts by mass of a complex solution of manganese neodecanoate and picolinic acid. Next, 11.1 parts by mass of diazabicycloundecene (molecular weight: 152.2 g/mol) was added thereto, and the mixture was stirred at 70°C for 1 hour to obtain a target compound (B9). The total molar number of picolinic acid and diazabicycloundecene relative to 1 mol of the metal of the metal salt (1) was 2.0.

### (Synthesis Example 22: Preparation of Compound (B10))

Added to a flask equipped with a thermometer, a stirrer, and a reflux cooler were 29.4 parts by mass of the metal salt (1) obtained in Synthesis Example 3, 211.7 parts by mass of benzyl alcohol, and 9.0 parts by mass of picolinic acid, which were reacted at 50°C for 1 hour to obtain 250.1 parts by mass of a complex solution of manganese neodecanoate and picolinic acid. Next, 9.0 parts by mass of diazabicyclononene (molecular weight: 124.2 g/mol) was added thereto, and the mixture was stirred at 70°C for 1 hour to obtain a target compound (B10). The total molar number of picolinic acid and diazabicyclononene relative to 1 mol of the metal of the metal salt (1) was 2.0.

### (Synthesis Example 23: Preparation of Compound (B11))

Added to a flask equipped with a thermometer, a stirrer, and a reflux cooler were 29.4 parts by mass of the metal salt (1) obtained in Synthesis Example 3, 211.7 parts by mass of benzyl alcohol, and 9.0 parts by mass of picolinic acid, which were reacted at 50°C for 1 hour to obtain 250.1 parts by mass of a complex solution of manganese neodecanoate and picolinic acid. Next, 11.4 parts by mass of 2,2'-bipyridine (molecular weight: 156.2 g/mol) was added thereto, and the mixture was stirred at 70°C for 1 hour to obtain a target compound (B11). The total molar number of picolinic acid and 2,2'-bipyridine relative to 1 mol of the metal of the metal salt (1) was 2.0.

### (Synthesis Example 24: Preparation of Compound (B12))

Added to a flask equipped with a thermometer, a stirrer, and a reflux cooler were 29.4 parts by mass of the metal salt (1) obtained in Synthesis Example 3, 211.7 parts by mass of benzyl alcohol, and 9.0 parts by mass of picolinic acid, which were reacted at 50°C for 1 hour to obtain 250.1 parts by mass of a complex solution of manganese neodecanoate and picolinic acid. Next, 20.6 parts by mass of 2,2'-[propane-1,2-diylbis(azanylylidenemethanylylidene)]diphenol (molecular weight: 282.2 g/mol) was added thereto, and the mixture was stirred at 70°C for 1 hour to obtain a target compound (B12). The total molar number of picolinic acid and 2,2'-[propane-1,2-diylbis(azanylylidenemethanylylidene)]diphenol relative to 1 mol of the metal of the metal salt (1) was 2.0.

### (Synthesis Example 25: Preparation of Compound (B13))

Added to a flask equipped with a thermometer, a stirrer, and a reflux cooler were 29.4 parts by mass of the metal salt (1) obtained in Synthesis Example 3, 211.7 parts by mass of benzyl alcohol, and 9.0 parts by mass of picolinic acid, which were reacted at 50°C for 1 hour to obtain 250.1 parts by mass of a complex solution of manganese neodecanoate and picolinic acid. Next, 10.3 parts by mass of 2,2'-[propane-1,2-diylbis(azanylylidenemethanylylidene)]diphenol (molecular weight: 282.2 g/mol) was added thereto, and the mixture was stirred at 70°C for 1 hour to obtain a target compound (B13). The total molar number of picolinic acid and 2,2'-[propane-1,2-diylbis(azanylylidenemethanylylidene)]diphenol relative to 1 mol of the metal of the metal salt (1) was 1.5.

### (Synthesis Example 26: Preparation of Compound (B14))

Added to a flask equipped with a thermometer, a stirrer, and a reflux cooler were 29.4 parts by mass of the metal salt (1) obtained in Synthesis Example 3, 211.7 parts by mass of benzyl alcohol, and 9.0 parts by mass of picolinic acid, which were reacted at 50°C for 1 hour to obtain 250.1 parts by mass of a complex solution of manganese neodecanoate and picolinic acid. Next, 61.7 parts by mass of 2,2'-[propane-1,2-diylbis(azanylylidenemethanylylidene)]diphenol (molecular weight: 282.2 g/mol) was added thereto, and the mixture was stirred at 70°C for 1 hour to obtain a target compound (B14). The total molar number of picolinic acid and 2,2'-[propane-1,2-diylbis(azanylylidenemethanylylidene)]diphenol relative to 1 mol of the metal of the metal salt (1) was 4.0.

### (Synthesis Example 27: Preparation of Compound (B15))

Added to a flask equipped with a thermometer, a stirrer, and a reflux cooler were 29.4 parts by mass of the metal salt (1) obtained in Synthesis Example 3, 211.7 parts by mass of benzyl alcohol, and 9.0 parts by mass of picolinic acid, which were reacted at 50°C for 1 hour to obtain 250.1 parts by mass of a complex solution of manganese neodecanoate and picolinic acid. Next, 102.8 parts by mass of 2,2'-[propane-1,2-diylbis(azanylylidenemethanylylidene)]diphenol (molecular weight: 282.2 g/mol) was added thereto, and the mixture was stirred at 70°C for 1 hour to obtain a target compound (B15). The total molar number of picolinic acid and 2,2'-[propane-1,2-diylbis(azanylylidenemethanylylidene)]diphenol relative to 1 mol of the metal of the metal salt (1) was 6.0.

### (Synthesis Example 28: Preparation of Compound (B16))

Added to a flask equipped with a thermometer, a stirrer, and a reflux cooler were 29.4 parts by mass of the metal salt (1) obtained in Synthesis Example 3, 211.7 parts by mass of benzyl alcohol, and 9.0 parts by mass of picolinic acid, which were reacted at 50°C for 1 hour to obtain 250.1 parts by mass of a complex solution of manganese neodecanoate and picolinic acid. Next, 205.5 parts by mass of 2,2'-[propane-1,2-diylbis(azanylylidenemethanylylidene)]diphenol (molecular weight: 282.2 g/mol) was added thereto, and the mixture was stirred at 70°C for 1 hour to obtain a target compound (B16). The total molar number of picolinic acid and 2,2'-[propane-1,2-diylbis(azanylylidenemethanylylidene)]diphenol relative to 1 mol of the metal of the metal salt (1) was 11.0.

### (Synthesis Example 29: Preparation of Compound (B17))

Added to a flask equipped with a thermometer, a stirrer, and a reflux cooler were 72.5 parts by mass of 8-quinolinol (molecular weight: 145.2 g/mol) and 418 parts by mass of the metal salt (6) obtained in Synthesis Example 8, and the mixture was stirred at 70°C for 1 hour to obtain a target compound (B17). The molar number of 8-quinolinol relative to 1 mol of the metal of the metal salt (6) was 1.0.

### (Synthesis Example 30: Preparation of Compound (B18))

Added to a flask equipped with a thermometer, a stirrer, and a reflux cooler were 76 parts by mass of diazabicycloundecene (molecular weight: 152.2 g/mol) and 396.9 parts by mass of the metal salt (4) obtained in Synthesis Example 6, and the mixture was stirred at 70°C for 1 hour to obtain a target compound (B18). The molar number of diazabicycloundecene relative to 1 mol of the metal of the metal salt (4) was 1.0.

### (Synthesis Example 31: Preparation of Compound (B19))

Added to a flask equipped with a thermometer, a stirrer, and a reflux cooler were 38 parts by mass of diazabicycloundecene (molecular weight: 152.2 g/mol) and 893.1 parts by mass of the metal salt (2) obtained in Synthesis Example 4, and the mixture was stirred at 70°C for 1 hour to obtain a target compound (B19). The molar number of diazabicycloundecene relative to 1 mol of the metal of the metal salt (2) was 1.0.

### (Synthesis Example 32: Preparation of Compound (B20))

Added to a flask equipped with a thermometer, a stirrer, and a reflux cooler were 29.4 parts by mass of the metal salt (1) obtained in Synthesis Example 3, 211.7 parts by mass of benzyl alcohol, and 9.0 parts by mass of picolinic acid, which were reacted at 50°C for 1 hour to obtain 250.1 parts by mass of a complex solution of manganese neodecanoate and picolinic acid. Next, 4.2 parts by mass of 1,2-cyclohexanediamine (molecular weight: 114.19 g/mol) was added thereto, and the mixture was stirred at 70°C for 1 hour to obtain a target compound (B20). The molar number of picolinic acid and 1,2-cyclohexanediamine relative to 1 mol of the metal of the metal salt (1) was 1.5.

### (Synthesis Example 33: Preparation of Compound (B21))

Added to a flask equipped with a thermometer, a stirrer, and a reflux cooler were 29.4 parts by mass of the metal salt (1) obtained in Synthesis Example 3, 211.7 parts by mass of benzyl alcohol, and 9.0 parts by mass of picolinic acid, which were reacted at 50°C for 1 hour to obtain 250.1 parts by mass of a complex solution of manganese neodecanoate and picolinic acid. Next, 8.9 parts by mass of 4-dimethylaminopyridine (molecular weight: 122.2 g/mol) was added thereto, and the mixture was stirred at 70°C for 1 hour to obtain a target compound (B21). The total molar number of picolinic acid and 4-dimethylaminopyridine relative to 1 mol of the metal of the metal salt (2) was 2.0.

### (Synthesis Example 34: Preparation of Compound (B22))

Added to a flask equipped with a thermometer, a stirrer, and a reflux cooler were 29.4 parts by mass of the metal salt (1) obtained in Synthesis Example 3, 211.7 parts by mass of benzyl alcohol, and 9.0 parts by mass of picolinic acid, which were reacted at 50°C for 1 hour to obtain 250.1 parts by mass of a complex solution of manganese neodecanoate and picolinic acid. Next, 27.0 parts by mass of a compound represented by the following structural formula (molecular weight: 370.4 g/mol) was added thereto, and the mixture was stirred at 70°C for 1 hour to obtain a target compound (B22). The total molar number of picolinic acid and the compound represented by the following structural formula relative to 1 mol of the metal of the metal salt (1) was 2.0.

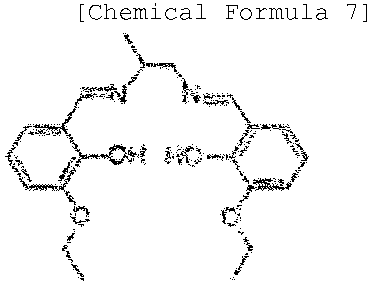

### (Synthesis Example 35: Preparation of Compound (B23))

Added to a flask equipped with a thermometer, a stirrer, and a reflux cooler were 29.4 parts by mass of the metal salt (1) obtained in Synthesis Example 3, 211.7 parts by mass of benzyl alcohol, and 9.0 parts by mass of picolinic acid, which were reacted at 50°C for 1 hour to obtain 250.1 parts by mass of a complex solution of manganese neodecanoate and picolinic acid. Next, 7.7 parts by mass of thiolactic acid (molecular weight 106.1 g/mol) was added thereto, and the mixture was stirred at 70°C for 1 hour to obtain a target compound (B22). The total molar number of picolinic acid and thiolactic acid relative to 1 mol of the metal of the metal salt (1) was 2.0.

### (Synthesis Example 36: Preparation of Compound (B24))

Added to a flask equipped with a thermometer, a stirrer, and a reflux cooler were 36.3 parts by mass of 8-quinolinol (molecular weight: 145.2 g/mol) and 418 parts by mass of the metal salt (6) obtained in Synthesis Example 8, and the mixture was stirred at 70°C for 1 hour to obtain a target compound (B17). The molar number of 8-quinolinol relative to 1 mol of the metal of the metal salt (6) was 0.5.

### (Synthesis Example 37: Preparation of Compound (B25))

Added to a flask equipped with a thermometer, a stirrer, and a reflux cooler were 39.9 parts by mass of the metal salt (3) obtained in Synthesis Example 5, 139.8 parts by mass of benzyl alcohol, and 10.0 parts by mass of picolinic acid, which were reacted at 50°C for 1 hour to obtain 189.7 parts by mass of a complex solution of cobalt 2-ethylhexanoate and picolinic acid. Next, 12.69 parts by mass of 2,2'-bipyridine (molecular weight: 156.2 g/mol) was added thereto, and the mixture was stirred at 70°C for 1 hour to obtain a target compound (B25). The total molar number of picolinic acid and 2,2'-bipyridine relative to 1 mol of the metal of the metal salt (3) was 2.0.

### (Synthesis Example 38: Preparation of Compound (B26))

Added to a flask equipped with a thermometer, a stirrer, and a reflux cooler were 39.9 parts by mass of the metal salt (3) obtained in Synthesis Example 5, 139.8 parts by mass of benzyl alcohol, and 10.0 parts by mass of picolinic acid, which were reacted at 50°C for 1 hour to obtain 189.7 parts by mass of a complex solution of cobalt 2-ethylhexanoate and picolinic acid. Next, 22.94 parts by mass of 2,2'-[propane-1,2-diylbis(azanylylidenemethanylylidene)]diphenol (molecular weight: 282.2 g/mol) was added thereto, and the mixture was stirred at 70°C for 1 hour to obtain a target compound (B26). The total molar number of picolinic acid and 2,2'-[propane-1,2-diylbis(azanylylidenemethanylylidene)]diphenol relative to 1 mol of the metal of the metal salt (3) was 2.0.

### (Synthesis Example 39: Preparation of Compound (B27))

Added to a flask equipped with a thermometer, a stirrer, and a reflux cooler were 39.9 parts by mass of the metal salt (3) obtained in Synthesis Example 5, 139.8 parts by mass of benzyl alcohol, and 10.0 parts by mass of picolinic acid, which were reacted at 50°C for 1 hour to obtain 189.7 parts by mass of a complex solution of cobalt 2-ethylhexanoate and picolinic acid. Next, 11.79 parts by mass of 8-quinolinol (molecular weight: 145.2 g/mol) was added thereto, and the mixture was stirred at 70°C for 1 hour to obtain a target compound (B27). The total molar number of picolinic acid and 8-quinolinol relative to 1 mol of the metal of the metal salt (3) was 2.0.

### (Synthesis Example 40: Preparation of Compound (B28))

Added to a flask equipped with a thermometer, a stirrer, and a reflux cooler were 24.2 parts by mass of the metal salt (5) obtained in Synthesis Example 7, 136.7 parts by mass of benzyl alcohol, and 10.0 parts by mass of picolinic acid, which were reacted at 50°C for 1 hour to obtain 170.8 parts by mass of a complex solution of zinc 2-ethylhexanoate and picolinic acid. Next, 12.68 parts by mass of 2,2'-bipyridine (molecular weight: 156.2 g/mol) was added thereto, and the mixture was stirred at 70°C for 1 hour to obtain a target compound (B28). The total molar number of picolinic acid and 2,2'-bipyridine relative to 1 mol of the metal of the metal salt (5) was 2.0.

### (Synthesis Example 41: Preparation of Compound (B29))

Added to a flask equipped with a thermometer, a stirrer, and a reflux cooler were 24.2 parts by mass of the metal salt (5) obtained in Synthesis Example 7, 136.7 parts by mass of benzyl alcohol, and 10.0 parts by mass of picolinic acid, which were reacted at 50°C for 1 hour to obtain 170.8 parts by mass of a complex solution of zinc 2-ethylhexanoate and picolinic acid. Next, 22.92 parts by mass of 2,2'-[propane-1,2-diylbis(azanylylidenemethanylylidene)]diphenol (molecular weight: 282.2 g/mol) was added thereto, and the mixture was stirred at 70°C for 1 hour to obtain a target compound (B29). The total molar number of picolinic acid and 2,2'-[propane-1,2-diylbis(azanylylidenemethanylylidene)]diphenol relative to 1 mol of the metal of the metal salt (5) was 2.0.

### (Synthesis Example 42: Preparation of Compound (B30))

Added to a flask equipped with a thermometer, a stirrer, and a reflux cooler were 24.2 parts by mass of the metal salt (5) obtained in Synthesis Example 7, 136.7 parts by mass of benzyl alcohol, and 10.0 parts by mass of picolinic acid, which were reacted at 50°C for 1 hour to obtain 170.8 parts by mass of a complex solution of zinc 2-ethylhexanoate and picolinic acid. Next, 4.63 parts by mass of 1,2-cyclohexanediamine (molecular weight: 114.19 g/mol) was added thereto, and the mixture was stirred at 70°C for 1 hour to obtain a target compound (B30). The total molar number of picolinic acid and 1,2-cyclohexanediamine relative to 1 mol of the metal of the metal salt (5) was 1.5.

### (Synthesis Example 43: Preparation of Compound (B31))

Added to a flask equipped with a thermometer, a stirrer, and a reflux cooler were 18.88 parts by mass of tributyl borate, 115.5 parts by mass of benzyl alcohol, and 10.0 parts by mass of picolinic acid, which were reacted at 50°C for 1 hour to obtain 144.4 parts by mass of a complex solution of tributyl borate and picolinic acid. Next, 11.79 parts by mass of 8-quinolinol (molecular weight: 145.2 g/mol) was added thereto, and the mixture was stirred at 70°C for 1 hour to obtain a target compound (B31). The total molar number of picolinic acid and 8-quinolinol relative to 1 mol of the metal of tributyl borate was 2.0.

### (Synthesis Example 44: Preparation of Compound (B32))

Added to a flask equipped with a thermometer, a stirrer, and a reflux cooler were 90.73 parts by mass of the metal salt (2) obtained in Synthesis Example 4, 189.7 parts by mass of benzyl alcohol, and 10.0 parts by mass of picolinic acid, which were reacted at 50°C for 1 hour to obtain 290.4 parts by mass of a complex solution of iron neodecanoate and picolinic acid. Next, 22.92 parts by mass of 2,2'-[propane-1,2-diylbis(azanylylidenemethanylylidene)]diphenol (molecular weight: 282.2 g/mol) was added thereto, and the mixture was stirred at 70°C for 1 hour to obtain a target compound (B32). The total molar number of picolinic acid and 2,2'-[propane-1,2-diylbis(azanylylidenemethanylylidene)]diphenol relative to 1 mol of the metal of the metal salt (2) was 2.0.

### (Synthesis Example 45: Preparation of Compound (B33))

Added to a flask equipped with a thermometer, a stirrer, and a reflux cooler were 29.4 parts by mass of the metal salt (1) obtained in Synthesis Example 3, 211.7 parts by mass of benzyl alcohol, and 9.0 parts by mass of picolinic acid, which were reacted at 50°C for 1 hour to obtain 250.1 parts by mass of a complex solution of manganese neodecanoate and picolinic acid. Next, 7.88 parts by mass of 2-picolylamine (molecular weight: 108.1 g/mol) was added thereto, and the mixture was stirred at 70°C for 1 hour to obtain a target compound (B33). The total molar number of picolinic acid and 2-picolylamine relative to 1 mol of the metal of the metal salt (1) was 2.0.

### (Synthesis Example 46: Preparation of Compound (B34))

Added to a flask equipped with a thermometer, a stirrer, and a reflux cooler were 30 parts by mass of 2-picolylamine (molecular weight: 108.1 g/mol) and 220.3 parts by mass of the metal salt (4) obtained in Synthesis Example 6, and the mixture was stirred at 70°C for 1 hour to obtain a target compound (B34). The molar number of 2-picolylamine relative to 1 mol of the metal of the metal salt (4) was 1.0.

### (Synthesis Example 47: Preparation of Compound (B35))

Added to a flask equipped with a thermometer, a stirrer, and a reflux cooler were 30 parts by mass of 2-picolylamine (molecular weight: 108.1 g/mol) and 222.8 parts by mass of the metal salt (1) obtained in Synthesis Example 3, and the mixture was stirred at 70°C for 1 hour to obtain a target compound (B35). The molar number of 2-picolylamine relative to 1 mol of the metal of the metal salt (1) was 1.0.

### (Synthesis Example 48: Preparation of Compound (B36))

Added to a flask equipped with a thermometer, a stirrer, and a reflux cooler were 30 parts by mass of 2-picolinamide (molecular weight: 122.1 g/mol) and 197.2 parts by mass of the metal salt (1) obtained in Synthesis Example 3, and the mixture was stirred at 70°C for 1 hour to obtain a target compound (B36). The molar number of 2-picolinamide relative to 1 mol of the metal of the metal salt (1) was 1.0.

### (Synthesis Example 49: Preparation of Compound (B37))

Added to a flask equipped with a thermometer, a stirrer, and a reflux cooler were 29.4 parts by mass of the metal salt (1) obtained in Synthesis Example 3, 211.7 parts by mass of benzyl alcohol, and 9.0 parts by mass of picolinic acid, which were reacted at 50°C for 1 hour to obtain 250.1 parts by mass of a complex solution of manganese neodecanoate and picolinic acid. Next, 8.9 parts by mass of 2-picolinamide (molecular weight: 122.1 g/mol) was added thereto, and the mixture was stirred at 70°C for 1 hour to obtain a target compound (B37). The total molar number of picolinic acid and 2-picolinamide relative to 1 mol of the metal of the metal salt (1) was 2.0.

### (Synthesis Example 50: Preparation of Compound (B38))

Added to a flask equipped with a thermometer, a stirrer, and a reflux cooler were 29.4 parts by mass of the metal salt (1) obtained in Synthesis Example 3, 211.7 parts by mass of benzyl alcohol, and 9.0 parts by mass of picolinic acid, which were reacted at 50°C for 1 hour to obtain 250.1 parts by mass of a complex solution of manganese neodecanoate and picolinic acid. Next, 13.13 parts by mass of 1,10-phenanthroline (molecular weight: 180.2 g/mol) was added thereto, and the mixture was stirred at 70°C for 1 hour to obtain a target compound (B38). The total molar number of picolinic acid and 1,10-phenanthroline relative to 1 mol of the metal of the metal salt (1) was 2.0.

### (Synthesis Example 51: Preparation of Compound (B39))

Added to a flask equipped with a thermometer, a stirrer, and a reflux cooler were 29.4 parts by mass of the metal salt (1) obtained in Synthesis Example 3, 211.7 parts by mass of benzyl alcohol, and 9.0 parts by mass of picolinic acid, which were reacted at 50°C for 1 hour to obtain 250.1 parts by mass of a complex solution of manganese neodecanoate and picolinic acid. Next, 18.03 parts by mass of tris(diethylamino)phosphine (molecular weight: 247.4 g/mol) was added thereto, and the mixture was stirred at 70°C for 1 hour to obtain a target compound (B39). The total molar number of picolinic acid and tris(diethylamino)phosphine relative to 1 mol of the metal of the metal salt (1) was 2.0.

### (Synthesis Example 52: Preparation of Compound (B40))

Added to a flask equipped with a thermometer, a stirrer, and a reflux cooler were 29.4 parts by mass of the metal salt (1) obtained in Synthesis Example 3, 211.7 parts by mass of benzyl alcohol, and 9.0 parts by mass of picolinic acid, which were reacted at 50°C for 1 hour to obtain 250.1 parts by mass of a complex solution of manganese neodecanoate and picolinic acid. Next, 30.06 parts by mass of 1,3-bis(diphenylphosphino)propane (molecular weight: 412.4 g/mol) was added thereto, and the mixture was stirred at 70°C for 1 hour to obtain a target compound (B40). The total molar number of picolinic acid and 1,3-bis(diphenylphosphino)propane relative to 1 mol of the metal of the metal salt (1) was 2.0.

### (Synthesis Example 53: Preparation of Compound (B41))

Added to a flask equipped with a thermometer, a stirrer, and a reflux cooler were 29.4 parts by mass of the metal salt (1) obtained in Synthesis Example 3, 211.7 parts by mass of benzyl alcohol, and 9.0 parts by mass of picolinic acid, which were reacted at 50°C for 1 hour to obtain a target compound (B41). The molar number of picolinic acid relative to 1 mol of the metal of the metal salt (1) was 1.0.

### (Example 1: Preparation of Active Energy Ray Curable Resin Composition (1))

Mixed together were 100 parts by mass (65 parts by mass in terms of solid content) of the resin (A1) having an acid group and a polymerizable unsaturated group with a nonvolatile content of 65% by mass obtained in Synthesis Example 1, 0.65 part by mass (solid content) of the compound (B1) obtained in Synthesis Example 13, and 19.7 parts by mass of an ortho-cresol novolac type epoxy resin ("EPICLON N-680" manufactured by DIC Corporation, epoxy equivalent: 214) as a curing agent to obtain a curable resin composition (1), and then mixed therewith were 10.6 parts by mass of diethylene glycol monoethyl ether acetate, 3.3 parts by mass of a photopolymerization initiator ("Omnirad 907" manufactured by IGM Resins B.V.), 6.4 parts by mass of dipentaerythritol hexaacrylate, 0.4 part by mass of 2-ethyl-4-methyl-imidazole, and 0.5 part by mass of phthalocyanine green to obtain an active energy curable resin composition (1) .

### (Examples 2 to 44: Preparation of Active Energy Ray Curable Resin Compositions (2) to (44))

Active energy ray curable resin compositions (2) to (44) were obtained in the same manner as in Example 1 with the blending ratios listed in Tables 1 to 4.

### (Comparative Example 1: Preparation of Active Energy Ray Curable Resin Composition (R1))

Mixed together were 100 parts by mass (65 parts by mass in terms of solid content) of the resin (A1) having an acid group and a polymerizable unsaturated group with a nonvolatile content of 65% by mass obtained in Synthesis Example 1, 0.65 part by mass of 1-methyl-imidazole, and 19.7 parts by mass of an ortho-cresol novolac type epoxy resin ("EPICLON N-680" manufactured by DIC Corporation, epoxy equivalent: 214) as a curing agent to obtain the curable resin composition (1), and then mixed therewith were 10.4 parts by mass of diethylene glycol monoethyl ether acetate, 3.3 parts by mass of a photopolymerization initiator ("Omnirad 907" manufactured by IGM Resins B.V.), 6.5 parts by mass of dipentaerythritol hexaacrylate, 0.4 part by mass of 2-ethyl-4-methyl-imidazole, and 0.5 part by mass of phthalocyanine green to obtain an active energy curable resin composition (R1).

### (Comparative Example 2: Preparation of Active Energy Ray Curable Resin Composition (R2))

Mixed together were 100 parts by mass (65 parts by mass in terms of solid content) of the resin (A1) having an acid group and a polymerizable unsaturated group with a nonvolatile content of 65% by mass obtained in Synthesis Example 1, 0.65 part by mass (solid content) of the metal salt (6), and 19.7 parts by mass of an ortho-cresol novolac type epoxy resin ("EPICLON N-680" manufactured by DIC Corporation, epoxy equivalent: 214) as a curing agent to obtain the curable resin composition (1), and then mixed therewith were 10.4 parts by mass of diethylene glycol monoethyl ether acetate, 3.3 parts by mass of a photopolymerization initiator ("Omnirad 907" manufactured by IGM Resins B.V.), 6.5 parts by mass of dipentaerythritol hexaacrylate, 0.4 part by mass of 2-ethyl-4-methyl-imidazole, and 0.5 part by mass of phthalocyanine green to obtain an active energy curable resin composition (R2).

The following evaluation was performed using the active energy ray curable resin compositions (1) to (44), (R1), and (R2) obtained in the above examples and comparative examples.

### [Methods for Evaluating Work Stability]

The active energy ray curable resin composition obtained in each of the examples and the comparative examples was applied to a glass substrate using an applicator so as to give a film thickness of 50 um and was then dried at 80°C for 20 minutes, 30 minutes, 40 minutes, 50 minutes, 60 minutes, 70 minutes, and 80 minutes to prepare samples with different drying times. These were developed in a 1% aqueous sodium carbonate solution at 30°C for 180 seconds, and the drying time at 80°C of a sample leaving no residue on the substrate was evaluated as a drying control band. A longer drying control band indicates better work stability.

Tables 1 to 4 list the compositions and the evaluation results of the active energy ray curable resin compositions (1) to (44) produced in Examples 1 to 44 and the active energy ray curable resin compositions (R1) and (R2) produced in Comparative Examples 1 and 2.

**[Table 1]**

| Table 1 | | Exampl e 1 | Exampl e 2 | Exampl e 3 | Exampl e 4 | Exampl e 5 | Exampl e 6 | Exampl e 7 | Exampl e 8 | Exampl e 9 | Exampl e 10 | Exampl e 11 | Exampl e 12 |
|---|---|---|---|---|---|---|---|---|---|---|---|---|---|
| Active energy ray curable resin composition | | (1) | (2) | (3) | (4) | (5) | (6) | (7) | (8) | (9) | (10) | (11) | (12) |
| | Resin (A1) having acid group and polymerizable unsaturated group | 65 | 65 | 65 | 65 | 65 | 65 | 65 | 65 | 65 | 65 | 65 | 65 |
| | Compound (B1) | 1.0 | | | | | | | | | | | |
| | Compound (B2) | | 1.0 | | | | | | | | | | |
| | Compound (B3) | | | 1.0 | | | | | | | | | |
| | Compound (B4) | | | | 1.0 | | | | | | | | |
| | Compound (B5) | | | | | 1.0 | | | | | | | |
| | Compound (B6) | | | | | | 1.0 | | | | | | |
| | Compound (B7) | | | | | | | 1.0 | | | | | |
| Compositi on (parts by mass) | Compound (B8) | | | | | | | | 1.0 | | | | |
| | Compound (B9) | | | | | | | | | 1.0 | | | |
| | Compound (B10) | | | | | | | | | | 1.0 | | |
| | Compound (B11) | | | | | | | | | | | 1.0 | |
| | Compound (B12) | | | | | | | | | | | | 1.0 |
| | Curing agent | 19.7 | 19.7 | 19.7 | 19.7 | 19.7 | 19.7 | 19.7 | 19.7 | 19.7 | 19.7 | 19.7 | 19.7 |
| | Organic solvent | 10.6 | 10.6 | 10.6 | 10.6 | 10.6 | 10.6 | 10.6 | 10.6 | 10.6 | 10.6 | 10.6 | 10.6 |
| | Photopolymerizat ion initiator | 3.3 | 3.3 | 3.3 | 3.3 | 3.3 | 3.3 | 3.3 | 3.3 | 3.3 | 3.3 | 3.3 | 3.3 |
| | Dipentaerythrito 1 hexaacrylate | 6.5 | 6.5 | 6.5 | 6.5 | 6.5 | 6.5 | 6.5 | 6.5 | 6.5 | 6.5 | 6.5 | 6.5 |
| | 2-Ethyl-4-methyl-imidazole | 0.4 | 0.4 | 0.4 | 0.4 | 0.4 | 0.4 | 0.4 | 0.4 | 0.4 | 0.4 | 0.4 | 0.4 |
| | Phthalocyanine green | 0.5 | 0.5 | 0.5 | 0.5 | 0.5 | 0.5 | 0.5 | 0.5 | 0.5 | 0.5 | 0.5 | 0.5 |
| Evaluatio n | Work stability [drying control band (minutes)] | 50 | 50 | 50 | 60 | 40 | 50 | 70 | 40 | 60 | 60 | 60 | 60 |

**[Table 2]**

| Table 2 | | Exampl e 13 | Exampl e 14 | Exampl e 15 | Exampl e 16 | Exampl e 17 | Exampl e 18 | Exampl e 19 | Exampl e 20 | Exampl e 21 | Exampl e 22 | Example 23 | Exampl e 24 |
|---|---|---|---|---|---|---|---|---|---|---|---|---|---|
| Active energy ray curable resin composition | | (13) | (14) | (15) | (16) | (17) | (18) | (19) | (20) | (21) | (22) | (23) | (24) |
| | Resin (A1) having acid group and polymerizable unsaturated group | 65 | 65 | 65 | 65 | 65 | 65 | 65 | 65 | 65 | 65 | 65 | 65 |
| | Compound (B13) | 1.0 | | | | | | | | | | | |
| | Compound (B14) | | 1.0 | | | | | | | | | | |
| | Compound (B15) | | | 1.0 | | | | | | | | | |
| | Compound (B16) | | | | 1.0 | | | | | | | | |
| | Compound (B17) | | | | | 1.0 | | | | | | | |
| | Compound (B18) | | | | | | 1.0 | | | | | | |
| | Compound (B19) | | | | | | | 1.0 | | | | | |
| | Compound (B20) | | | | | | | | 1.0 | | | | |
| | Compound (B21) | | | | | | | | | 1.0 | | | |
| | Compound (B22) | | | | | | | | | | 1.0 | | |
| | Compound (B23) | | | | | | | | | | | 1.0 | |
| Compositi on (parts by mass) | Compound (B24) | | | | | | | | | | | | 1.0 |
| | Curing agent | 19.7 | 19.7 | 19.7 | 19.7 | 19.7 | 19.7 | 19.7 | 19.7 | 19.7 | 19.7 | 19.7 | 19.7 |
| | Organic solvent | 10.6 | 10.6 | 10.6 | 10.6 | 10.6 | 10.6 | 10.6 | 10.6 | 10.6 | 10.6 | 10.6 | 10.6 |
| | Photopolymerizat ion initiator | 3.3 | 3.3 | 3.3 | 3.3 | 3.3 | 3.3 | 3.3 | 3.3 | 3.3 | 3.3 | 3.3 | 3.3 |
| | Dipentaerythrito 1 hexaacrylate | 6.5 | 6.5 | 6.5 | 6.5 | 6.5 | 6.5 | 6.5 | 6.5 | 6.5 | 6.5 | 6.5 | 6.5 |
| | 2-Ethyl-4-methyl-imidazole | 0.4 | 0.4 | 0.4 | 0.4 | 0.4 | 0.4 | 0.4 | 0.4 | 0.4 | 0.4 | 0.4 | 0.4 |
| | Phthalocyanine green | 0.5 | 0.5 | 0.5 | 0.5 | 0.5 | 0.5 | 0.5 | 0.5 | 0.5 | 0.5 | 0.5 | 0.5 |
| Evaluatio n | Work stability [drying control band (minutes)] | 70 | 60 | 50 | 50 | 70 | 40 | 40 | 70 | 60 | 40 | 40 | 60 |

**[Table 3]**

| Table 3 | | Exampl e 25 | Exampl e 26 | Exampl e 27 | Exampl e 28 | Exampl e 29 | Exampl e 30 | Exampl e 31 | Exampl e 32 | Exampl e 33 | Exampl e 34 | Exampl e 35 | Exampl e 36 |
|---|---|---|---|---|---|---|---|---|---|---|---|---|---|
| Active energy ray curable resin composition | | (25) | (26) | (27) | (28) | (29) | (30) | (31) | (32) | (33) | (34) | (35) | (36) |
| | Resin (A1) having acid group and polymerizable unsaturated group | 65 | 65 | 65 | 65 | 65 | 65 | 65 | 65 | 65 | 65 | 65 | 65 |
| | Compound (B25) | 1.0 | | | | | | | | | | | |
| | Compound (B26) | | 1.0 | | | | | | | | | | |
| | Compound (B27) | | | 1.0 | | | | | | | | | |
| | Compound (B28) | | | | 1.0 | | | | | | | | |
| | Compound (B29) | | | | | 1.0 | | | | | | | |
| | Compound (B30) | | | | | | 1.0 | | | | | | |
| | Compound (B31) | | | | | | | 1.0 | | | | | |
| | Compound (B32) | | | | | | | | 1.0 | | | | |
| | Compound (B33) | | | | | | | | | 1.0 | | | |
| | Compound (B34) | | | | | | | | | | 1.0 | | |
| Compositi on (parts by mass) | Compound (B35) | | | | | | | | | | | 1.0 | |
| | Compound (B36) | | | | | | | | | | | | 1.0 |
| | Curing agent | 19.7 | 19.7 | 19.7 | 19.7 | 19.7 | 19.7 | 19.7 | 19.7 | 19.7 | 19.7 | 19.7 | 19.7 |
| | Organic solvent | 10.6 | 10.6 | 10.6 | 10.6 | 10.6 | 10.6 | 10.6 | 10.6 | 10.6 | 10.6 | 10.6 | 10.6 |
| | Photopolymerizat ion initiator | 3.3 | 3.3 | 3.3 | 3.3 | 3.3 | 3.3 | 3.3 | 3.3 | 3.3 | 3.3 | 3.3 | 3.3 |
| | Dipentaerythrito 1 hexaacrylate | 6.5 | 6.5 | 6.5 | 6.5 | 6.5 | 6.5 | 6.5 | 6.5 | 6.5 | 6.5 | 6.5 | 6.5 |
| | 2-Ethyl-4-methyl-imidazole | 0.4 | 0.4 | 0.4 | 0.4 | 0.4 | 0.4 | 0.4 | 0.4 | 0.4 | 0.4 | 0.4 | 0.4 |
| | Phthalocyanine green | 0.5 | 0.5 | 0.5 | 0.5 | 0.5 | 0.5 | 0.5 | 0.5 | 0.5 | 0.5 | 0.5 | 0.5 |
| Evaluatio n | Work stability [drying control band (minutes)] | 60 | 60 | 50 | 50 | 50 | 50 | 50 | 40 | 50 | 50 | 50 | 60 |

**[Table 4]**

| Table 4 | | Exampl e 37 | Exampl e 38 | Exampl e 39 | Exampl e 40 | Exampl e 41 | Exampl e 42 | Exampl e 43 | Exampl e 44 | Comparativ e Example 1 | Comparativ e Example 2 |
|---|---|---|---|---|---|---|---|---|---|---|---|
| Active energy ray curable resin composition | | (37) | (38) | (39) | (40) | (41) | (42) | (43) | (44) | (R1) | (R2) |
| Compositio n (parts by mass) | Resin (A1) having acid group and polymerizable unsaturated group | 65 | 65 | 65 | 65 | 65 | 65 | 65 | | 65 | 65 |
| | Resin (A2) having acid group and polymerizable unsaturated group | | | | | | | | 70 | | |
| | Compound (B12) | | | | | | 2.0 | 3.25 | | | |
| | Compound (B37) | 1.0 | | | | | | | | | |
| | Compound (B38) | | 1.0 | | | | | | | | |
| | Compound (39) | | | 1.0 | | | | | | | |
| | Compound (40) | | | | 1.0 | | | | | | |
| | Compound (41) | | | | | 1.0 | | | 1.0 | | |
| | 1-Methylimidazole | | | | | | | | | 0.65 | |
| | Metal salt (6) | | | | | | | | | | 0.65 |
| | Curing agent | 19.7 | 19.7 | 19.7 | 19.7 | 19.7 | 19.7 | 19.7 | 20.9 | 19.7 | 19.7 |
| | Organic solvent | 10.6 | 10.6 | 10.6 | 10.6 | 10.6 | 10.6 | 10.6 | 11.3 | 10.6 | 10.6 |
| | Photopolymerizati on initiator | 3.3 | 3.3 | 3.3 | 3.3 | 3.3 | 3.3 | 3.3 | 3.5 | 3.3 | 3.3 |
| | Dipentaerythritol hexaacrylate | 6.5 | 6.5 | 6.5 | 6.5 | 6.5 | 6.5 | 6.5 | 7.0 | 6.5 | 6.5 |
| | 2-Ethyl-4-methyl-imidazole | 0.4 | 0.4 | 0.4 | 0.4 | 0.4 | 0.4 | 0.4 | 0.4 | 0.4 | 0.4 |
| | Phthalocyanine green | 0.5 | 0.5 | 0.5 | 0.5 | 0.5 | 0.5 | 0.5 | 0.5 | 0.5 | 0.5 |
| Evaluation | Work stability [drying control band (minutes)] | 50 | 60 | 60 | 60 | 60 | 50 | 40 | 90 | - | 60 |

### (Example 45: Preparation of Active Energy Ray Curable Resin Composition (45))

Mixed together were 100 parts by mass (65 parts by mass in terms of solid content) of the resin (A1) having an acid group and a polymerizable unsaturated group with a nonvolatile content of 65% by mass obtained in Synthesis Example 1, 0.65 part by mass (solid content) of the compound (B1) obtained in Synthesis Example 13, and 19.7 parts by mass of an ortho-cresol novolac type epoxy resin ("EPICLON N-680" manufactured by DIC Corporation, epoxy equivalent: 214) as a curing agent to obtain the curable resin composition (1), and then mixed therewith were 10.6 parts by mass of diethylene glycol monoethyl ether acetate and 3.3 parts by mass of a photopolymerization initiator ("Omnirad 907" manufactured by IGM Resins B.V.) to obtain an active energy curable resin composition (45).

### (Examples 46 to 88: Preparation of Active Energy Ray Curable Resin Compositions (46) to (88))

Active energy ray curable resin compositions (46) to (88) were obtained in the same manner as in Example 45 with the blending ratios listed in Tables 5 to 8.

### (Comparative Example 3: Preparation of Active Energy Ray Curable Resin Composition (R3))

Mixed together were 100 parts by mass (65 parts by mass in terms of solid content) of the resin (A1) having an acid group and a polymerizable unsaturated group with a nonvolatile content of 65% by mass obtained in Synthesis Example 1, 0.65 part by mass of 1-methyl-imidazole, and 19.7 parts by mass of an ortho-cresol novolac type epoxy resin ("EPICLON N-680" manufactured by DIC Corporation, epoxy equivalent: 214) as a curing agent to obtain the curable resin composition (1), and then mixed therewith were 10.4 parts by mass of diethylene glycol monoethyl ether acetate and 3.3 parts by mass of a photopolymerization initiator ("Omnirad 907" manufactured by IGM Resins B.V.) to obtain an active energy curable resin composition (R3).

### (Comparative Example 4: Preparation of Active Energy Ray Curable Resin Composition (R4))

Mixed together were 100 parts by mass (65 parts by mass in terms of solid content) of the resin (A1) having an acid group and a polymerizable unsaturated group with a nonvolatile content of 65% by mass obtained in Synthesis Example 1, 0.65 part by mass (solid content) of the metal salt (6), and 19.7 parts by mass of an ortho-cresol novolac type epoxy resin ("EPICLON N-680" manufactured by DIC Corporation, epoxy equivalent: 214) as a curing agent to obtain the curable resin composition (1), and then mixed therewith were 10.4 parts by mass of diethylene glycol monoethyl ether acetate and 3.3 parts by mass of a photopolymerization initiator ("Omnirad 907" manufactured by IGM Resins B.V.) to obtain an active energy curable resin composition (R4).

The following evaluations were performed using the active energy ray curable resin compositions (45) to (88), (R3), and (R4) obtained in the above examples and comparative examples.

### [Method for Evaluating Heat Resistance]

The active energy ray curable resin composition obtained in each of the examples and the comparative examples was applied onto copper foil (electrolytic copper foil "F2-WS" 18 um manufactured by Furukawa Sangyo Kaisha, Ltd.) using an applicator so as to give a film thickness of 50 um and was dried at 80°C for 30 minutes. Next, the film was irradiated with 10 kJ/m² ultraviolet rays using a metal halide lamp and was then heated at 160°C for 1 hour to obtain a cured coating film. Next, the cured coating film was peeled off from the copper foil to obtain a cured product. A 6 mm × 35 mm test piece was cut out of the cured product, and the temperature at which the elastic modulus change was maximum was evaluated as a glass transition temperature using a viscoelasticity measurement apparatus (DMA: solid viscoelasticity measurement apparatus "RSA II" manufactured by Rheometric Scientific, tensile method: frequency: 1 Hz, temperature rising rate: 3°C/minute). A higher glass transition temperature indicates having better heat resistance.

### [Methods for Evaluating Substrate Adhesion]

The evaluation of substrate adhesion was performed by measuring peel strength.

### <Preparation of Test Piece 1>

The active energy ray curable resin composition obtained in each of the examples and the comparative examples was applied onto copper foil (electrolytic copper foil "F2-WS" 18 um manufactured by Furukawa Sangyo Kaisha, Ltd.) with a 50 um applicator, was irradiated with 10 kJ/m² ultraviolet rays using a metal halide lamp, and was then heated at 160°C for 1 hour to obtain a test piece 1.

### <Method for Measuring Peel Strength>

The test piece 1 was cut into a size with a width of 1 cm and a length of 12 cm, and 90° peel strength was measured using a peel tester ("A&D Tensilon" manufactured by A&D Company, Limited, peel speed: 50 mm/minute).

### [Method for Evaluating Latency]

The evaluation of latency was performed by DSC measurement.

A heat generation starting temperature was measured with a differential scanning calorimeter ("DSC3+" manufactured by Mettler Toledo, sample amount: 4.0 to 8.0 mg, aluminum sample pan size: 5 mm in diameter × 2.5 mm, temperature rising rate: 3°C/minute, nitrogen flow rate: 40 ml/minute, temperature range: 0 to 180°C). The heat generation starting temperature was determined by the "onset temperature" automatically calculated by a computer.

Tables 5 to 8 list the compositions and the evaluation results of the active energy ray curable resin compositions (45) to (88) produced in Examples 45 to 88 and the active energy ray curable resin compositions (R3) and (R4) produced in Comparative Examples 3 and 4.

**[Table 5]**

| Table 5 | | Exampl e 45 | Exampl e 46 | Exampl e 47 | Exampl e 48 | Exampl e 49 | Exampl e 50 | Exampl e 51 | Exampl e 52 | Exampl e 53 | Exampl e 54 | Exampl e 55 | Exampl e 56 |
|---|---|---|---|---|---|---|---|---|---|---|---|---|---|
| Active energy ray curable resin composition | | (45) | (46) | (47) | (48) | (49) | (50) | (51) | (52) | (53) | (54) | (55) | (56) |
| Compositi on (parts by mass) | Resin (A1) having acid group and polymerizable unsaturated group | 65 | 65 | 65 | 65 | 65 | 65 | 65 | 65 | 65 | 65 | 65 | 65 |
| | Compound (B1) | 1.0 | | | | | | | | | | | |
| | Compound (B2) | | 1.0 | | | | | | | | | | |
| | Compound (B3) | | | 1.0 | | | | | | | | | |
| | Compound (B4) | | | | 1.0 | | | | | | | | |
| | Compound (B5) | | | | | 1.0 | | | | | | | |
| | Compound (B6) | | | | | | 1.0 | | | | | | |
| | Compound (B7) | | | | | | | 1.0 | | | | | |
| | Compound (B8) | | | | | | | | 1.0 | | | | |
| | Compound (B9) | | | | | | | | | 1.0 | | | |
| | Compound (B10) | | | | | | | | | | 1.0 | | |
| | Compound (B11) | | | | | | | | | | | 1.0 | |
| | Compound (B12) | | | | | | | | | | | | 1.0 |
| | Curing agent | 19.7 | 19.7 | 19.7 | 19.7 | 19.7 | 19.7 | 19.7 | 19.7 | 19.7 | 19.7 | 19.7 | 19.7 |
| | Organic solvent | 10.6 | 10.6 | 10.6 | 10.6 | 10.6 | 10.6 | 10.6 | 10.6 | 10.6 | 10.6 | 10.6 | 10.6 |
| | Photopolymerizat ion initiator | 3.3 | 3.3 | 3.3 | 3.3 | 3.3 | 3.3 | 3.3 | 3.3 | 3.3 | 3.3 | 3.3 | 3.3 |
| Evaluatio n | Heat resistance (DMA, Tg, °C) | 185 | 185 | 180 | 189 | 177 | 181 | 176 | 168 | 186 | 189 | 182 | 165 |
| | Adhesion (N/cm) | 0.495 | 0.541 | 0.464 | 0.618 | 0.629 | 0.630 | 0.663 | 0.642 | 0.531 | 0.530 | 0.555 | 0.511 |
| | Latency (DSC, heat generation starting temperature, °C) | 131 | 132 | 133 | 134 | 130 | 135 | 161 | 128 | 137 | 141 | 148 | 154 |

**[Table 6]**

| Table 6 | | Exampl e 57 | Exampl e 58 | Exampl e 59 | Exampl e 60 | Exampl e 61 | Exampl e 62 | Exampl e 63 | Exampl e 64 | Exampl e 65 | Exampl e 66 | Exampl e 67 | Exampl e 68 |
|---|---|---|---|---|---|---|---|---|---|---|---|---|---|
| Active energy ray curable resin composition | | (57) | (58) | (59) | (60) | (61) | (62) | (63) | (64) | (65) | (66) | (67) | (68) |
| Compositi on (parts by mass) | Resin (A1) having acid group and polymerizable unsaturated group | 65 | 65 | 65 | 65 | 65 | 65 | 65 | 65 | 65 | 65 | 65 | 65 |
| | Compound (B13) | 1.0 | | | | | | | | | | | |
| | Compound (B14) | | 1.0 | | | | | | | | | | |
| | Compound (B15) | | | 1.0 | | | | | | | | | |
| | Compound (B16) | | | | 1.0 | | | | | | | | |
| | Compound (B17) | | | | | 1.0 | | | | | | | |
| | Compound (B18) | | | | | | 1.0 | | | | | | |
| | Compound (B19) | | | | | | | 1.0 | | | | | |
| | Compound (B20) | | | | | | | | 1.0 | | | | |
| | Compound (B21) | | | | | | | | | 1.0 | | | |
| | Compound (B22) | | | | | | | | | | 1.0 | | |
| | Compound (B23) | | | | | | | | | | | 1.0 | |
| | Compound (B24) | | | | | | | | | | | | 1.0 |
| | Curing agent | 19.7 | 19.7 | 19.7 | 19.7 | 19.7 | 19.7 | 19.7 | 19.7 | 19.7 | 19.7 | 19.7 | 19.7 |
| | Organic solvent | 10.6 | 10.6 | 10.6 | 10.6 | 10.6 | 10.6 | 10.6 | 10.6 | 10.6 | 10.6 | 10.6 | 10.6 |
| | Photopolymerizat ion initiator | 3.3 | 3.3 | 3.3 | 3.3 | 3.3 | 3.3 | 3.3 | 3.3 | 3.3 | 3.3 | 3.3 | 3.3 |
| Evaluatio n | Heat resistance (DMA, Tg, °C) | 169 | 177 | 170 | 172 | 180 | 186 | 172 | 184 | 189 | 158 | 152 | 159 |
| | Adhesion (N/cm) | 0.591 | 0.588 | 0.583 | 0.600 | 0.649 | 0.501 | 0.495 | 0.520 | 0.567 | 0.461 | 0.536 | 0.593 |
| | Latency (DSC, heat generation starting temperature, °C) | 159 | 155 | 157 | 155 | 164 | 133 | 134 | 155 | 133 | 147 | 141 | 170 |

**[Table 7]**

| Table 7 | | Exampl e 69 | Exampl e 70 | Exampl e 71 | Exampl e 72 | Exampl e 73 | Exampl e 74 | Exampl e 75 | Exampl e 76 | Exampl e 77 | Exampl e 78 | Exampl e 79 | Exampl e 80 |
|---|---|---|---|---|---|---|---|---|---|---|---|---|---|
| Active energy ray curable resin composition | | (69) | (70) | (71) | (72) | (73) | (74) | (75) | (76) | (77) | (78) | (79) | (80) |
| Compositi on (parts by mass) | Resin (A1) having acid group and polymerizable unsaturated group | 65 | 65 | 65 | 65 | 65 | 65 | 65 | 65 | 65 | 65 | 65 | 65 |
| | Compound (B25) | 1.0 | | | | | | | | | | | |
| | Compound (B26) | | 1.0 | | | | | | | | | | |
| | Compound (B27) | | | 1.0 | | | | | | | | | |
| | Compound (B28) | | | | 1.0 | | | | | | | | |
| | Compound (B29) | | | | | 1.0 | | | | | | | |
| | Compound (B30) | | | | | | 1.0 | | | | | | |
| | Compound (B31) | | | | | | | 1.0 | | | | | |
| | Compound (B32) | | | | | | | | 1.0 | | | | |
| | Compound (B33) | | | | | | | | | 1.0 | | | |
| | Compound (B34) | | | | | | | | | | 1.0 | | |
| | Compound (B35) | | | | | | | | | | | 1.0 | |
| | Compound (B36) | | | | | | | | | | | | 1.0 |
| | Curing agent | 19.7 | 19.7 | 19.7 | 19.7 | 19.7 | 19.7 | 19.7 | 19.7 | 19.7 | 19.7 | 19.7 | 19.7 |
| | Organic solvent | 10.6 | 10.6 | 10.6 | 10.6 | 10.6 | 10.6 | 10.6 | 10.6 | 10.6 | 10.6 | 10.6 | 10.6 |
| | Photopolymerizat ion initiator | 3.3 | 3.3 | 3.3 | 3.3 | 3.3 | 3.3 | 3.3 | 3.3 | 3.3 | 3.3 | 3.3 | 3.3 |
| Evaluatio n | Heat resistance (DMA, Tg, °C) | 185 | 179 | 182 | 176 | 186 | 184 | 185 | 177 | 177 | 176 | 176 | 184 |
| | Adhesion (N/cm) | 0.492 | 0.570 | 0.467 | 0.542 | 0.499 | 0.462 | 0.661 | 0.740 | 0.644 | 0.798 | 0.630 | 0.566 |
| | Latency (DSC, heat generation starting temperature, °C) | 155 | 154 | 159 | 151 | 154 | 152 | 149 | 149 | 143 | 146 | 146 | 150 |

**[Table 8]**

| Table 8 | | Exampl e 81 | Exampl e 82 | Exampl e 83 | Exampl e 84 | Exampl e 85 | Exampl e 86 | Exampl e 87 | Exampl e 88 | Comparativ e Example 3 | Comparativ e Example 4 |
|---|---|---|---|---|---|---|---|---|---|---|---|
| Active energy ray curable resin composition | | (81) | (82) | (83) | (84) | (85) | (86) | (87) | (88) | (R3) | (R4) |
| Compositio n (parts by mass) | Resin (A1) having acid group and polymerizable unsaturated group | 65 | 65 | 65 | 65 | 65 | 65 | 65 | | 65 | 65 |
| | Resin (A2) having acid group and polymerizable unsaturated group | | | | | | | | 70 | | |
| | Compound (B12) | | | | | | 2.0 | 3.25 | | | |
| | Compound (B37) | 1.0 | | | | | | | | | |
| | Compound (B38) | | 1.0 | | | | | | | | |
| | Compound (B39) | | | 1.0 | | | | | | | |
| | Compound (B40) | | | | 1.0 | | | | | | |
| | Compound (B41) | | | | | 1.0 | | | 1.0 | | |
| | 1-Methylimidazole | | | | | | | | | 0.65 | |
| | Metal salt (6) | | | | | | | | | | 0.65 |
| | Curing agent | 19.7 | 19.7 | 19.7 | 19.7 | 19.7 | 19.7 | 19.7 | 20.6 | 19.7 | 19.7 |
| | Organic solvent | 10.6 | 10.6 | 10.6 | 10.6 | 10.6 | 10.6 | 10.6 | 11.1 | 10.6 | 10.6 |
| | Photopolymerizati on initiator | 3.3 | 3.3 | 3.3 | 3.3 | 3.3 | 3.3 | 3.3 | 3.5 | 3.3 | 3.3 |
| Evaluation | Heat resistance (DMA, Tg, °C) | 181 | 179 | 180 | 182 | 184 | 171 | 178 | 155 | 161 | 154 |
| | Adhesion (N/cm) | 0.578 | 0.498 | 0.543 | 0.512 | 0.645 | 0.521 | 0.546 | 0.674 | 0.408 | 0.451 |
| | Latency (DSC, heat generation starting temperature, °C) | 159 | 152 | 147 | 141 | 151 | 149 | 144 | 137 | 61 | |

In Tables 1 to 8, the description of the parts by mass of the resin (A1) having an acid group and a polymerizable unsaturated group and the compounds (B1) to (B41) is a solid content value.

In Table 4, "-" indicates non-developable.

In Table 8, "-" indicates that the heat generation starting temperature could not be determined and no reaction occurred.

In Tables 1 to 8, "Curing agent" indicates an ortho-cresol novolac type epoxy resin (EPICLON N-680 manufactured by DIC Corporation).

In Tables 1 to 8, "Organic solvent" indicates diethylene glycol monomethyl ether acetate.

In Tables 1 to 8, "Photopolymerization initiator" indicates "Omnirad 907" manufactured by IGM Resins B.V.

Examples 1 to 44 listed in Tables 1 to 4 are examples of the active energy ray curable resin composition containing the curable resin composition containing the resin having an acid group and a polymerizable unsaturated group and the compound containing the compound having a heteroatom having an unshared electron pair in the molecule and the metal salt as essential raw materials of the present invention. It has been confirmed that these active energy ray curable resin compositions have excellent work stability.

Examples 45 to 88 listed in Tables 5 to 8 are examples of the active energy ray curable resin composition containing the curable resin composition containing the resin having an acid group and a polymerizable unsaturated group and the compound containing the compound having a heteroatom having an unshared electron pair in the molecule and the metal salt as essential raw materials of the present invention. It has been confirmed that these active energy ray curable resin compositions have excellent latency and the cured products of the active energy ray curable resin compositions have excellent heat resistance and substrate adhesion.

Comparative Examples 1 and 3, on the other hand, are examples of the active energy ray curable resin composition containing the curable resin composition containing the resin having an acid group and a polymerizable unsaturated group and the compound having a heteroatom having an unshared electron pair in the molecule. It has been confirmed that these active energy ray curable resin compositions have markedly insufficient work stability and latency, and the cured products of these active energy ray curable resin compositions also have insufficient heat resistance and substrate adhesion.

Comparative Examples 2 and 4 are examples of the active energy ray curable resin composition containing the curable resin composition containing the resin having an acid group and a polymerizable unsaturated group and the metal salt. It has been confirmed that these active energy ray curable resin compositions have markedly insufficient latency and the cured products of these active energy ray curable resin compositions also have insufficient heat resistance and substrate adhesion.

## Claims

1. A curable resin composition comprising:
a resin (A) having an acid group and a polymerizable unsaturated group; and
a compound (B) containing a compound (b1) having a heteroatom having an unshared electron pair in the molecule and a metal salt (b2) as essential raw materials,
the heteroatom being one or more selected from the group consisting of nitrogen, oxygen, sulfur, and phosphorus.

2. The curable resin composition according to claim 1, further comprising a curing agent (C).

3. The curable resin composition according to claim 1 or 2, wherein a metal of the metal salt (b2) is one or more selected from the group consisting of vanadium, manganese, iron, cobalt, nickel, copper, zinc, zirconium, bismuth, rare earths, boron, aluminum, neodymium, and barium.

4. The curable resin composition according to any one of claims 1 to 3, wherein the metal salt (b2) is a fatty acid metal salt.

5. The curable resin composition according to any one of claims 1 to 4, wherein the fatty acid metal salt is a metal salt of a C₈₋₁₅ fatty acid.

6. The curable resin composition according to any one of claims 1 to 5, wherein the compound (b1) has at least one carbon-nitrogen unsaturated bond in one molecule.

7. The curable resin composition according to any one of claims 1 to 6, wherein the compound (b1) has a molecular weight of 300 or less.

8. The curable resin composition according to any one of claims 1 to 7, wherein the compound (b1) ranges from 0.3 to 11 mol based on a molar number of a metal of the metal salt (b2) .

9. The curable resin composition according to any one of claims 1 to 8, wherein a content of the compound (B) is 5 parts by mass or less in terms of solid content relative to 100 parts by mass of a solid content of the resin (A).

10. An active energy ray curable resin composition comprising:
the curable resin composition having an acid group according to any one of claims 1 to 9; and
a photopolymerization initiator.

11. A cured product of the active energy ray curable resin composition according to claim 10.

12. An article comprising a coating film formed of the cured product according to claim 11.
